# EUROPEAN PATENT APPLICATION

(11) **EP 4 436 277 A1**
(43) Date of publication of application: **25.09.2024**
(21) Application number: 22892142.5
(22) Date of filing: 14.11.2022
(51) Int. Cl.: H04W 64/00

(54) **POSITIONING METHOD AND APPARATUS, AND TERMINAL**

(30) Priority: 15.11.2021 CN 202111348326
(71) Applicant: Datang Mobile Communications Equipment Co., Ltd., Beijing 100085 (CN)
(72) Inventor: LI, Jianxiang, Beijing 100085 (CN)
(74) Representative: Maiwald GmbH
(86) International application number: PCT/CN2022/131737
(87) International publication number: WO 2023/083349

(57) **Abstract**

A positioning method and apparatus, and a terminal are provided. The method includes: obtaining positioning-related information by a first terminal based on a sidelink communication interface; determining, by the first terminal according to the positioning-related information, a target terminal initiating a D2D positioning service; and performing a process of the D2D positioning service with the target terminal through the sidelink communication interface.

## Description

### CROSS-REFERENCE TO RELATED APPLICATION

This application claims a priority to Chinese Patent Application No. 202111348326.X filed on November 15, 2021, the disclosures of which are incorporated in their entirety by reference herein.

### TECHNICAL FIELD

The present disclosure relates to the field of communications technologies, and in particular, to a positioning method, a positioning apparatus, and a terminal.

### BACKGROUND

Various solutions for positioning personnel or assets by using cellular and wireless devices are included in the related art, for example, accurate positioning based on Global Navigation Satellite System (GNSS) satellite signals, accurate positioning based on mobile communication cellular network signals, and the like.

With development of an autonomous-driving terminal, location requirement is strong, and at present, a terminal mainly relies on a GNSS signal or a continuous cellular network for positioning. However, in case that no GNSS signal or GNSS signal is very weak and is insufficient to support GNSS positioning and there is no network coverage of an operator, the consumer, a mobile terminal or the vehicle cannot accurately determine its own position, which brings obstacles to automatic driving, indoor navigation, outdoor navigation, vehicle searching and other location-based services. In the related art, independent networking positioning technologies, such as Bluetooth, Wireless Fidelity (WiFi), etc. have problems such as low positioning accuracy, low electromagnetic anti-interference capability, incapability of continuously covering networking, and the like, and cannot provide continuous high-precision positioning services.

### SUMMARY

An objective of the present disclosure is to provide a positioning method, a positioning apparatus, and a terminal, which solve the problem in the related art that a continuous high-precision positioning service cannot be provided in case that a GNSS signal or a cellular network signal is weak.

A positioning method is provided in the embodiments of the present disclosure. The method includes: obtaining positioning-related information based on a sidelink communication interface by a first terminal; determining, by the first terminal according to the positioning-related information, a target terminal that initiates a Device-to-Device (D2D) positioning service; performing a process of the D2D positioning service with the target terminal through a sidelink communication interface by the first terminal.

Optionally, obtaining the positioning-related information based on the sidelink communication interface includes: broadcasting a service request message of the first terminal through a sidelink communication interface; receiving first positioning-related information from a second terminal through the sidelink communication interface; and/or monitoring second positioning-related information sent by the second terminal through the sidelink communication interface.

Optionally, performing the process of the D2D positioning service with the target terminal includes at least one of following: performing a process of a relative-position request service between the first terminal and the target terminal; performing a process of the absolute-position request service of the first terminal; performing a process of the absolute-position request service of the target terminal.

Optionally, performing the process of the D2D positioning service with the target terminal through the sidelink communication interface includes: sending a first positioning request message to the target terminal through the sidelink communication interface; receiving a positioning response message from the target terminal; in case that the positioning response message indicates that the target terminal accepts the D2D positioning service, performing the process of the D2D positioning service, wherein the D2D positioning service includes: the relative-position request service between the first terminal and the target terminal, and/or the absolute-position request service of the first terminal.

Optionally, performing the process of the relative-position request service between the first terminal and the target terminal includes: sending a first sidelink positioning reference signal (SL-PRS) to the target terminal; receiving a second SL-PRS from the target terminal; respectively measuring the first SL-PRS and the second SL-PRS to obtain first measurement information; receiving second measurement information from the target terminal; determining first information of the relative position between the first terminal and the target terminal according to the first measurement information and the second measurement information.

Optionally, the method further includes: sending the first measurement information to the target terminal; receiving second information of the relative position between the first terminal and the target terminal from the target terminal, wherein the second information of the relative position is determined by the target terminal according to the first measurement information and the second measurement information.

Optionally, performing the process of the absolute-position request service of the first terminal includes: sending a first sidelink positioning reference signal (SL-PRS) to the target terminal; receiving a second SL-PRS from the target terminal; respectively measuring the first SL-PRS and the second SL-PRS to obtain first measurement information; receiving second measurement information and absolute position information of the target terminal from the target terminal; determining absolute position information of the first terminal according to the first measurement information, the second measurement information, and the absolute position information of the target terminal.

Optionally, performing the process of the absolute-position request service of the first terminal includes: sending a first sidelink positioning reference signal (SL-PRS) to the target terminal; receiving a second SL-PRS from the target terminal; respectively measuring the first SL-PRS and the second SL-PRS to obtain first measurement information; sending the first measurement information to the target terminal; and receiving absolute position information of the first terminal from the target terminal through the sidelink communication interface, wherein the absolute position information of the first terminal is determined by the target terminal according to the first measurement information, second measurement information of the target terminal, and absolute position information of the target terminal.

Optionally, performing the process of the absolute-position request service of the first terminal includes: sending a first sidelink positioning reference signal (SL-PRS) to the target terminal; receiving a second SL-PRS from the target terminal; respectively measuring the first SL-PRS and the second SL-PRS to obtain first measurement information; sending the first measurement information to a network side device; receiving absolute position information of the first terminal from the network side device, wherein the absolute position information of the first terminal is determined by the network side device based on the first measurement information, second measurement information of the target terminal, and absolute position information of the target terminal.

Optionally, the method further includes: sending first positioning capability information of the first terminal to the target terminal; receiving second positioning capability information of the target terminal from the target terminal; determining a positioning manner according to the first positioning capability information and the second positioning capability information.

Optionally, the method further includes: sending a first signal resource to the target and the network side device; and receiving a second signal resource of the target terminal from the network side device.

Optionally, the method further includes: sending first positioning capability information of the first terminal to the network side device.

Optionally, the method further includes: sending a second positioning request message to the network side device, wherein the second positioning request message includes identification information of the first terminal and identification information of the target terminal; receiving a positioning response message from the network side device.

Optionally, performing the process of the absolute-position request service of the target terminal includes: sending a third positioning request message to the target terminal, wherein the third positioning request message is configured to indicate that the first terminal is to establish an absolute positioning service with the target terminal; receiving a positioning response message from the target terminal; receiving absolute position information of the target terminal from the target terminal, in case that the positioning response message indicates that the target terminal accepts the absolute positioning service.

A positioning method is provided in the embodiments of the present disclosure. The method includes: performing, by a target terminal, a process of a Device-to-Device (D2D) positioning service with a first terminal based on a sidelink communication interface.

Optionally, the method further includes: receiving a service request message broadcast by the first terminal through a sidelink communication interface; sending first positioning-related information to the first terminal based on the sidelink communication interface according to the service request message; and/or sending second positioning-related information based on the sidelink communication interface.

Optionally, performing the process of the D2D positioning service with the first terminal includes at least one of following: performing a process of a relative-position request service between the first terminal and the target terminal; performing a process of the absolute-position request service of the first terminal; performing a process of the absolute-position request service of the target terminal.

Optionally, performing the process of the D2D positioning service with the first terminal based on the sidelink communication interface includes: receiving a first positioning request message from the first terminal; determining to accept the relative positioning service according to the first positioning request message; sending a positioning response message to the first terminal; performing the process of the D2D positioning service, wherein the D2D positioning service includes: a relative-position request service between the first terminal and the target terminal, and/or a absolute-position request service of the first terminal.

Optionally, performing the process of the relative-position request service between the first terminal and the target terminal includes: receiving a first sidelink positioning reference signal (SL-PRS) from the first terminal; sending a second SL-PRS to the first terminal; respectively measuring the first SL-PRS and the second SL-PRS to obtain second measurement information; sending the second measurement information to the first terminal.

Optionally, the method further includes: receiving first measurement information from the first terminal; determining second information of the relative position between the first terminal and the target terminal according to the first measurement information and the second measurement information; sending the second information of the relative position to the first terminal.

Optionally, performing the process of the absolute-position request service of the first terminal includes: receiving a first sidelink positioning reference signal (SL-PRS) from the first terminal; sending a second SL-PRS to the first terminal; respectively measuring the first SL-PRS and the second SL-PRS to obtain second measurement information; sending the second measurement information and absolute position information of the target terminal to the first terminal.

Optionally, performing the process of the absolute-position request service of the first terminal includes: receiving a first sidelink positioning reference signal (SL-PRS) from the first terminal; sending a second SL-PRS to the first terminal; respectively measuring the first SL-PRS and the second SL-PRS to obtain second measurement information; receiving first measurement information from the first terminal; determining absolute position information of the first terminal according to the first measurement information, the second measurement information, and absolute position information of the target terminal; sending the absolute position information of the first terminal to the first terminal through the sidelink communication interface.

Optionally, performing the process of the absolute-position request service of the first terminal includes: receiving a first sidelink positioning reference signal (SL-PRS) from the first terminal; sending a second SL-PRS to the first terminal; respectively measuring the first SL-PRS and the second SL-PRS to obtain second measurement information; sending the second measurement information and absolute position information of the target terminal to a network side device.

Optionally, the method further includes: receiving first positioning capability information from the first terminal; sending second positioning capability information to the first terminal.

Optionally, performing the process of the absolute-position request service of the target terminal includes: receiving a third positioning request message from the first terminal, wherein the third positioning request message is configured to indicate that the first terminal is to establish an absolute positioning service with the target terminal; determining to accept the relative positioning service according to the third positioning request message; sending absolute position information of the target terminal to the first terminal.

A terminal is provided in the embodiments of the present disclosure. The terminal includes: a memory, a transceiver, and a processor, wherein the memory is configured to store a computer program; the processor is configured to read the computer program in the memory; the transceiver is configured to send and receive data under the control of the processor and perform obtaining positioning-related information based on a sidelink communication interface; the processor is configured to read the computer program in the memory and perform the following operations:
determining, according to the positioning-related information, a target terminal that initiates a Device-to-Device (D2D) positioning service; performing a process of the D2D positioning service with the target terminal through a sidelink communication interface.

Optionally, the processor is configured to read the computer program in the memory, and perform at least one of following operations: performing a process of a relative-position request service between a first terminal and the target terminal; performing a process of the absolute-position request service of the first terminal; performing a process of the absolute-position request service of the target terminal.

Optionally, the transceiver is configured to send a first positioning request message to the target terminal through the sidelink communication interface, and receive a positioning response message from the target terminal; the processor is configured to read the computer program in the memory and perform the following operations: performing the process of the D2D positioning service in case that the positioning response message indicates that the target terminal accepts the D2D positioning service, wherein the D2D positioning service includes: the relative-position request service between the first terminal and the target terminal, and/or the absolute-position request service of the first terminal.

Optionally, the processor is configured to read the computer program in the memory and perform the following operations: sending a first sidelink positioning reference signal (SL-PRS) to the target terminal; receiving a second SL-PRS from the target terminal; respectively measuring the first SL-PRS and the second SL-PRS to obtain first measurement information; receiving second measurement information from the target terminal; determining first information of the relative position between the first terminal and the target terminal according to the first measurement information and the second measurement information.

Optionally, the transceiver is further configured to: send the first measurement information to the target terminal; receive second information of the relative position between the first terminal and the target terminal from the target terminal, wherein the second information of the relative position is determined by the target terminal according to the first measurement information and the second measurement information.

Optionally, the processor is configured to read the computer program in the memory and perform the following operations: sending a first sidelink positioning reference signal (SL-PRS) to the target terminal; receiving a second SL-PRS from the target terminal; respectively measuring the first SL-PRS and the second SL-PRS to obtain first measurement information; receiving second measurement information and absolute position information of the target terminal from the target terminal; determining absolute position information of the first terminal according to the first measurement information, the second measurement information, and the absolute position information of the target terminal.

Optionally, the processor is configured to read the computer program in the memory and perform the following operations: sending a first sidelink positioning reference signal (SL-PRS) to the target terminal; receiving a second SL-PRS from the target terminal; respectively measuring the first SL-PRS and the second SL-PRS to obtain first measurement information; sending the first measurement information to the target terminal; and receiving absolute position information of the first terminal from the target terminal through the sidelink communication interface, wherein the absolute position information of the first terminal is determined by the target terminal according to the first measurement information, second measurement information of the target terminal, and absolute position information of the target terminal.

Optionally, the processor is configured to read the computer program in the memory and perform the following operations: sending a first sidelink positioning reference signal (SL-PRS) to the target terminal; receiving a second SL-PRS from the target terminal; respectively measuring the first SL-PRS and the second SL-PRS to obtain first measurement information; sending the first measurement information to a network side device; receiving absolute position information of the first terminal from the network side device, wherein the absolute position information of the first terminal is determined by the network side device based on the first measurement information, second measurement information of the target terminal, and absolute position information of the target terminal.

Optionally, the processor is configured to read the computer program in the memory and perform the following operations: sending a third positioning request message to the target terminal, wherein the third positioning request message is configured to indicate that the first terminal is to establish an absolute positioning service with the target terminal; receiving a positioning response message from the target terminal; receiving absolute position information of the target terminal from the target terminal, in case that the positioning response message indicates that the target terminal accepts the absolute positioning service.

A terminal is provided in the embodiments of the present disclosure. The terminal includes: a memory, a transceiver, and a processor, wherein the memory is configured to store a computer program; the transceiver is configured to send and receive data under the control of the processor; and the processor is configured to read the computer program in the memory and perform the following operation: performing a process of a Device-to-Device (D2D) positioning service with a first terminal based on a sidelink communication interface.

Optionally, the processor is configured to read a computer program in the memory and perform at least one of the following operations: performing a process of a relative-position request service between the first terminal and the target terminal; performing a process of the absolute-position request service of the first terminal; performing a process of the absolute-position request service of the target terminal.

36. The terminal according to claim 35, wherein the transceiver is configured to receive a first positioning request message from the first terminal, wherein the first positioning request message is configured to indicate that the first terminal is to establish a relative positioning service with the target terminal; determine to accept the relative positioning service according to the first positioning request message; send a positioning response message to the first terminal; wherein the processor is configured to perform the process of the D2D positioning service.

Optionally, the processor is configured to read the computer program in the memory and perform the following operations: receiving a third positioning request message from the first terminal, wherein the third positioning request message is configured to indicate that the first terminal is to establish an absolute positioning service with the target terminal; determining to accept the relative positioning service according to the third positioning request message; sending absolute position information of the target terminal to the first terminal.

A positioning apparatus is provided in the embodiments of the present disclosure. The apparatus includes: a first obtaining unit, configured to obtain positioning-related information based on a sidelink communication interface; a first determining unit, configured to determine, according to the positioning-related information, a target terminal that initiates a Device-to-Device (D2D) positioning service; a first performing unit, configured to perform a process of the D2D positioning service with the target terminal through a sidelink communication interface.

A positioning apparatus is provided in the embodiments of the present disclosure. The positioning apparatus includes: a second performing unit, configured to perform a process of a Device-to-Device (D2D) positioning service with a first terminal based on a sidelink communication interface.

A processor-readable storage medium having stored thereon a computer program is provided in the embodiments of the present disclosure, wherein when the computer program is executed by a processor, the processor implements the steps of the positioning method in the above.

The above technical solutions of the present disclosure have the following beneficial effects: in the embodiments of the present disclosure, the first terminal obtains the positioning-related information based on the sidelink communication interface, determines the target terminal initiating the D2D positioning service according to the positioning-related information, and initiates the D2D positioning service to the target terminal based on the sidelink communication interface, so that a continuous, reliable and high-precision positioning service can be provided in an area where the GNSS signal or the cellular network signal is unreachable or weak.

### BRIEF DESCRIPTION OF THE DRAWINGS

FIG. 1 is a schematic diagram of a positioning architecture;
FIG. 2 is a schematic diagram of an LPP capability transmission process;
FIG. 3 is a schematic diagram of an LPP capability indication process;
FIG. 4 shows a first schematic diagrams of a sidelink communication process;
FIG. 5 is a second schematic diagram of a sidelink communication process;
FIG. 6 is a first schematic flowchart of a positioning method according to some embodiments of the present disclosure;
FIG. 7 is a second schematic flowchart of a positioning method according to some embodiments of the present disclosure;
FIG. 8 is a third schematic flowchart of a positioning method according to some embodiments of the present disclosure;
FIG. 9 is a fourth schematic flowchart of a positioning method according to some embodiments of the present disclosure;
FIG. 10 is a fifth schematic flowchart of a positioning method according to some embodiments of the present disclosure;
FIG. 11 is a sixth schematic flowchart of a positioning method according to some embodiments of the present disclosure;
FIG. 12 is a first schematic structural diagram of a positioning apparatus according to some embodiments of the present disclosure;
FIG. 13 is a second schematic structural diagram of a positioning apparatus according to some embodiments of the present disclosure;
FIG. 14 is a first schematic structural diagram of a terminal according to some embodiments of the present disclosure;
FIG. 15 is a second schematic structural diagram of a terminal according to some embodiments of the present disclosure.

### DETAILED DESCRIPTION

In order to make the technical problems, technical solutions, and advantages of the present disclosure clearer, the following describes in detail with reference to the accompanying drawings and specific embodiments. In the following description, specific details such as specific configurations and components are provided merely to help fully understand the embodiments of the present disclosure. Therefore, those skilled in the art should understand that various changes and modifications may be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Thus, "in one embodiment" or "in an embodiment" appearing throughout the specification does not necessarily refer to the same embodiment. Furthermore, these particular features, structures, or characteristics may be combined in any suitable manner in one or more embodiments.

In various embodiments of the present disclosure, it should be understood that sequence numbers of the following processes do not imply the execution order, the execution order of each process should be determined by its function and internal logic, and should not constitute any limitation on the implementation process of the embodiments of the present disclosure.

In the embodiments of the present disclosure, the term "and/or" describes the association relationship of the associated objects, indicating that there may be three relationships, for example, A and/or B may indicate that A exists alone, A and B exist simultaneously, and B exists alone. The character "/" generally indicates an "or" relationship between the associated objects.

In the embodiments of the present disclosure, the term "plurality" refers to two or more, and the other quantifiers are similar thereto.

The technical solutions in the embodiments of the present disclosure will be clearly and completely described below with reference to the accompanying drawings in the embodiments of the present disclosure. Obviously, the described embodiments are only part, rather than all, of the embodiments of the present disclosure. All other embodiments obtained by a person of ordinary skill in the art based on the embodiments of the present disclosure without creative efforts shall fall within the protection scope of the present disclosure.

In the description of the embodiments of the present disclosure, some concepts used in the following description are first explained.

### 1. A positioning architecture.

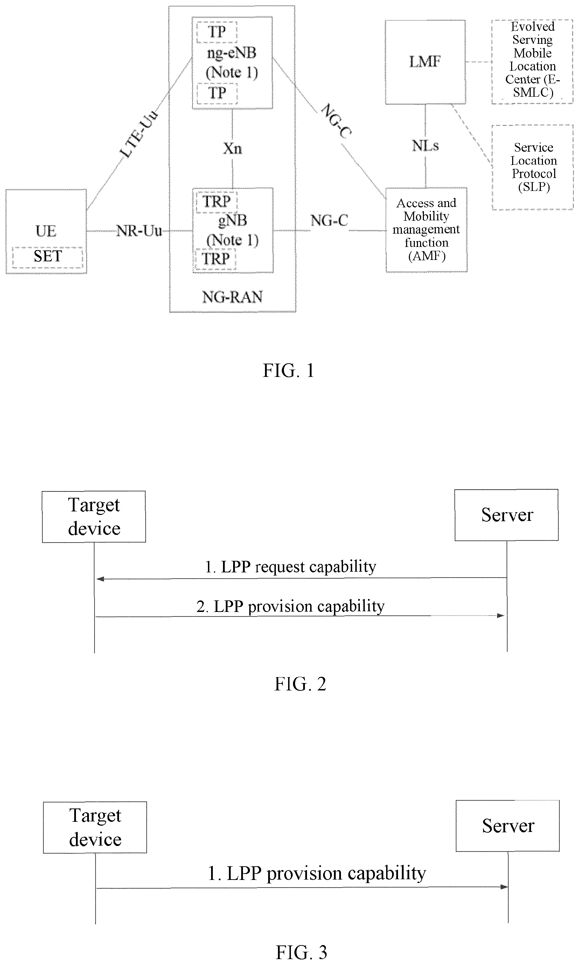

As shown in FIG. 1,
a Location Management Function entity (LMF) is a positioning server, is responsible for selecting a positioning method and triggering a corresponding positioning measurement, and can calculate a final positioning result and precision;
a 5th generation mobile communication (5G) radio access network (NG-RAN) may send a positioning reference signal, or perform positioning measurement based on the auxiliary information;

User Equipment (UE): or referred to as a user equipment, may send a positioning reference signal, or perform positioning measurement based on the auxiliary information; or calculate a positioning final result and precision based on a measurement result.

### 2. Transmission of positioning capability

A positioning capability in a Long Term Evolution (LTE) positioning protocol (LPP) includes a positioning method supported by a target device, different aspects supported by a certain positioning method (for example, an Assisted Global Navigation Satellite System (A-GNSS) assistance data type), and common features of certain positioning which is not limited to a certain positioning method, for example, a capability of processing a plurality of LPP transactions. The LTE-Uu may represent a long term evolution interface, NR-Uu may represent a new radio interface, NG-C may represent a next generation control, NLs may represent a narrowband local switch, NG-eNB may be a updated fourth generation mobile communication (4 th-Generation, 4G) base station after docking with a 5G core network, the gNB may be a 5G base station, the TP may represent a transition point, the TRP may represent a total radiation power, and NR may represent a new air interface.

The LPP positioning capability transfer transaction may be triggered by a server request, or "actively reported" by the target device.

As shown in FIG. 2, the LPP capability transmission process includes:
Step 1: a server sends an LPP request capability message to request a related positioning capability of a target device;
Step 2: a target lateral server transmits a related positioning capability, and the capability may include a specific positioning method and common features of some positioning methods, and the like.

In addition, the LPP capability indication process is used to actively transmit capability information, as shown in FIG. 3. The server may be an LMF in the 5G positioning architecture.

### 3. Sidelink communication.

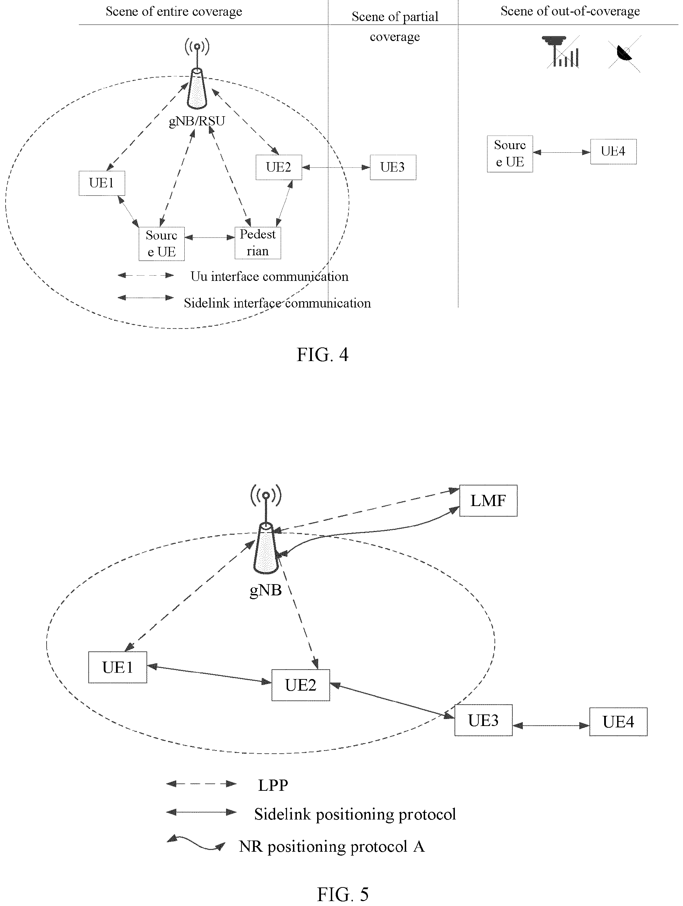

Sidelink communication refers to a manner in which neighboring terminals may perform data transmission through a sidelink communication link (also referred to as a sidelink) within a short distance range. The wireless interface corresponding to the Sidelink link is referred to as a sidelink communication interface, which is also referred to as a Sidelink interface. A schematic communication diagram of the terminal in the coverage area and outside the coverage area is shown in FIG. 4 and FIG. 5

Specifically, an embodiment of the present disclosure provides a positioning method, which solves the problem in the related art that a continuous high-precision positioning service cannot be provided in case that a GNSS signal or a cellular network signal is weak.

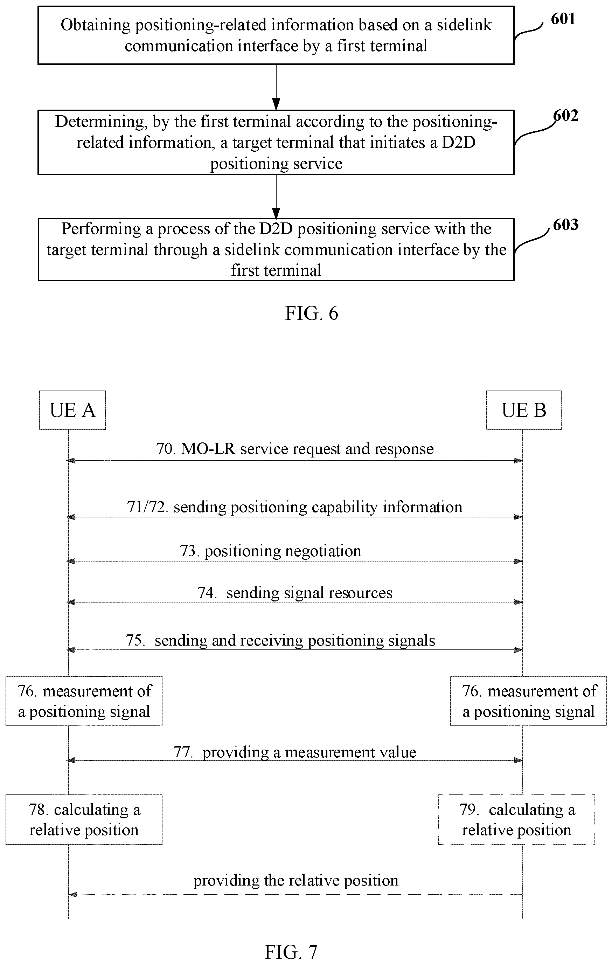

As shown in FIG. 6, an embodiment of the present disclosure provides a positioning method, which specifically includes the following steps:

Step 601: a first terminal obtains positioning-related information based on a sidelink communication interface.

Step 602: the first terminal determines, based on the positioning-related information, a target terminal that initiates an D2D positioning service.

In this embodiment, the first terminal may be a source terminal, that is, a source radio identifier transmitter. The first terminal obtains positioning-related information through a sidelink communication interface (that is, a sidelink interface), where it is exemplary that the sidelink communication interface is a sidelink interface, and an interface related to a sidelink communication between the terminals, appearing later and being capable of implementing a similar function can also be adopted in the present application, which is not limited herein. Optionally, the first terminal may broadcast a service request of the first terminal, initiate a request to wait a response of a responsive terminal, and then obtain a target terminal supporting this type of service corresponding to the service request; and the first terminal may also obtain, by receiving a signal or information sent based on the sidelink communication interface by the surrounding terminals, the target terminal that may initiate the D2D positioning service.

There may be one or more target terminals, and in case that there are a plurality of target terminals, the first terminal determines a list of target terminals according to the positioning-related information.

Step 603: the first terminal performs an D2D positioning service process with the target terminal through a sidelink communication interface.

After determining the target terminal initiating the D2D positioning service, the first terminal initiates an D2D positioning service request to one or more target terminals based on the obtained target terminal.

In the embodiments of the present disclosure, the first terminal obtains the positioning-related information based on the sidelink communication interface, determines the target terminal initiating the D2D positioning service according to the positioning-related information, and initiates an D2D positioning service to the target terminal based on the sidelink communication interface, so that a continuous, reliable and high-precision positioning service can be provided in an area where the GNSS signal or the cellular network signal is unreachable or weak.

The present disclosure may implement relative positioning between the target terminal devices, and high-precision positioning of the wireless device itself. By using the embodiments of the present disclosure, accurate relative positions between a person and a vehicle can be obtained in areas with weak signals such as an underground parking lot; in addition, it is also possible to deploy a target terminal, such as a beacon station, with known determined positions in a scenario where satellite signals such as an underground parking lot and a tunnel are unreachable or weak, for example, a beacon station, to obtain an accurate position of the terminal by means of the beacon stations. For example, the autonomous driving terminal enters the underground park, the GNSS signal is lost, and reliable high-precision continuous location services are provided for these autonomous driving terminals through the telecommunication-level positioning service, so that the autonomous driving application scenario is further expanded. In the scenarios of underground and tunnels without GNSS signals, a continuous and reliable location service can be provided for consumers.

In an optional embodiment, the obtaining, by the first terminal, positioning-related information based on the sidelink communication interface may include one or a combination of more of the following manners:

Manner 1: broadcasting a service request message of the first terminal through a sidelink communication interface; and receiving first positioning-related information sent by a second terminal through the sidelink communication interface. In this manner 1, the source UE (that is, the first terminal) expecting to obtain the location information first broadcasts its own service request, and broadcasts the broadcast information through the sidelink interface, where the service request message may include at least one of the following:
1. identification information of the first terminal;
2. a service of the request positioning service, for example, a relative position between the first terminal itself and the peer UE is requested, an absolute position of the first terminal is requested, an absolute position of the peer UE of the first terminal is requested, and the like;
3. an indicator requirement of Quality of Service (QoS) of a positioning service, for example, the positioning accuracy and the confidence interval, the allowed delay of positioning, the integrity requirement, and the like.

After broadcasting the service request by using the sidelink interface, the first terminal waits for the first positioning-related information fed back by the surrounding appropriate second UE; after receiving the service request from the first terminal, the second terminal determines whether to accept a positioning-service related request of the target terminal; if accept, then the second terminal returns acknowledge information to the target terminal, where the acknowledge information includes the first positioning-related information; and the first terminal determines, based on the first positioning-related information, the target terminal initiating the service in the second terminals.

Optionally, the first positioning-related information includes at least one of the following:
1. identification information of the second terminal;
2. a service type accepted by the second terminal;
3. a QoS update advice of the positioning service, for example, the positioning accuracy and the confidence interval, the allowed delay of positioning, the integrity requirement, and the like;
4. the received signal power of the second terminal which is used to indicate the received signal strength of the second terminal for selection performed by the first terminal.

Manner 2: monitoring second positioning-related information sent by the second terminal through the sidelink communication interface

In the manner 2, the first terminal expecting to obtain the location information first monitors the signal or service information sent by the surrounding UE (that is, the second terminal); and the second terminal may broadcast the broadcast information through the sidelink interface, where the broadcast information includes the second positioning-related information of the second terminal. The second positioning-related information may include at least one of the following:
1. identification information of the second terminal;
2. a service type supported by the second terminal, i.e. the service type currently supportable by the second terminal, for example, the second terminal may support a service related to a relative position between the second terminal and a peer UE (that is, the first terminal), or the second terminal may provide a service type such as an absolute location of the second terminal itself;
3. The QoS indicator requirement of the positioning service; the QoS indicator requirement may be a QoS indicator requirement corresponding to the service type supported by the second terminal.

After receiving the second positioning-related information broadcast by the second terminal, the first terminal determines the target terminal initiating the service request, in combination with the positioning service of the first terminal itself.

It should be noted that, because the target terminal is determined by the first terminal from the second terminals, the target terminal is one or more of the second terminals.

In an embodiment of the present disclosure, performing an D2D positioning service process with the target terminal includes at least one of the following:
performing a process of a relative-position request service between the first terminal and the target terminal;
performing a process of an absolute-position request service of the first terminal;
performing a process of an absolute-position request service of the target terminal.

In this embodiment, the service type of the positioning service may include at least one of the following:
a service type 1 of the relative-position request service between the first terminal and the target terminal requests a service; that is, the first terminal obtains a relative position between the first terminal and the peer UE;
a service type 2 of the absolute-position request service of the first terminal; that is, the first terminal obtains its own absolute position;
a service type 3 of the absolute-position request service of the target terminal; that is, the first terminal obtains the absolute position of the peer UE.

It should be noted that the positioning service initiated by the first terminal may be one or more combinations of the foregoing types, for example, the first terminal obtains the absolute position of the first terminal, and also obtains an absolute position of the peer UE; and the first terminal obtains an absolute position of the first terminal and a relative position between the first terminal and the peer UE, and the like, and details are not described herein again.

The implementation process of the positioning method according to the embodiments of the present disclosure is described below for different service types, respectively.

In an optional embodiment, for the first service type and/or the second service type, that is, the first terminal obtains the relative position between the first terminal and the peer UE, and/or the first terminal obtains the absolute position of the first terminal. Optionally, performing the D2D positioning service process with the target terminal through the sidelink communication interface includes following steps.

Step 1: sending a first positioning request message to the target terminal through the sidelink communication interface.

The D2D positioning service includes: a relative-position request service between the first terminal and the target terminal, and/or a absolute-position request service of the first terminal. Optionally, in case that the D2D positioning service is a relative-position request service between the first terminal and the target terminal, the first positioning request message is used to indicate that the first terminal is to establish a relative positioning service with the target terminal; and in case that the D2D positioning service is a absolute-position request service of the first terminal, the first positioning request message is used to indicate that the first terminal is to establish an absolute positioning service with the target terminal.

Step 2: receiving a positioning response message sent by the target terminal.

Step 3: In case that the positioning response message indicates that the target terminal accepts the D2D positioning service, performing the D2D positioning service process.

In this embodiment, the first terminal initiates an end-to-end positioning request to the target terminal, sends the first positioning request message, and requests to establish an D2D positioning service. After receiving the first positioning request message, the target terminal determines whether to accept the D2D positioning service and return a positioning response message; and if the target terminal accepts the D2D positioning service, the target terminal performs the D2D positioning service process with the first terminal.

Optionally, the first positioning request message includes a privacy check request, and after receiving the first positioning request message, the target terminal executes a privacy check process to determine whether to accept the D2D positioning service and return the positioning response message.

Optionally, performing a process of the relative-position request service between the first terminal and the target terminal includes following steps.

Step 31: sending a first sidelink positioning reference signal SL-PRS to the target terminal; optionally, the first terminal may send the first SL-PRS to the target terminal through the first signal resource.

Step 32: receiving a second SL-PRS sent by the target terminal; optionally, the first terminal may receive the second SL-PRS through a second signal resource.

Step 33: measuring the first SL-PRS and the second SL-PRS respectively to obtain first measurement information.

Step 34: receiving second measurement information sent by the target terminal.

Step 35: determining first relative position information between the first terminal and the target terminal according to the first measurement information and the second measurement information.

In this embodiment, the first terminal and the target terminal send periodic positioning signals to each other, and start to receive positioning signals; the first terminal and the target terminal respectively measure the positioning signals received and sent by the first terminal and the target terminal to obtain corresponding measurement information, that is, the first terminal measures the first SL-PRS sent by the first terminal and the received second SL-PRS to obtain first measurement information; and the target terminal measures the second SL-PRS sent by the target terminal and the received first SL-PRS to obtain the second measurement information, and sends the second measurement information to the first terminal.

The first terminal calculates the relative position between the first terminal and the target terminal according to the first measurement information and the second measurement information, where the relative position may include a relative distance and a relative direction.

Optionally, the method further includes: sending the first measurement information to the target terminal; and receiving second information of a relative position between the first terminal and the target terminal sent by the target terminal, where the second information of the relative position is determined by the target terminal based on the first measurement information and the second measurement information.

In this embodiment, after obtaining the first measurement information, the first terminal may send the first measurement information to the target terminal, and the target terminal calculates the relative position between the first terminal and the target terminal according to the first measurement information and the second measurement information, and sends the relative position to the first terminal, so that the first terminal uses the relative position as a reference to determine the accuracy of the relative position, thereby avoiding a large error and improving positioning accuracy.

Optionally, the first measurement information includes at least one of the following:
1. time difference between first time when the first terminal sends the first SL-PRS and second time when the first terminal receives the second SL-PRS; that is, time difference between signal reception by the first terminal and signal transmission by the first terminal;
2. a reference signal receiving power (RSRP) value of the second SL-PRS received by the first terminal; that is, an RSRP value of receiving a positioning signal from the opposite end by the first terminal;
3. a direction angle value of receiving the second SL-PRS by the first terminal; that is, a direction angle value of receiving the positioning signal from the opposite end by the first terminal;
4. a direction angle value of sending the first SL-PRS by the first terminal; that is, a direction angle value of sending the positioning signal by the first terminal.

Optionally, the second measurement information includes at least one of the following:
1. time difference between third time when the target terminal sends the second SL-PRS and fourth time when the target terminal receives the first SL-PRS; that is, time difference between the signal reception by the target terminal and the signal transmission by the target terminal;
2. a reference signal receiving power (RSRP) value of the first SL-PRS received by the target terminal; that is, an RSRP value of receiving a positioning signal from the opposite end by the target terminal;
3. a direction angle value of receiving the first SL-PRS by the target terminal; that is, a direction angle value of receiving the positioning signal from the opposite end by the target terminal;
4. a direction angle value of sending the second SL-PRS by the target terminal; that is, a direction angle value of sending the positioning signal by the target terminal.

Optionally, the method further includes: sending first positioning capability information of the first terminal to the target terminal; receiving second positioning capability information of the target terminal sent by the target terminal; and determining a positioning manner according to the first positioning capability information and the second positioning capability information.

In this embodiment, the first terminal sends positioning capability information, and provides its own capability of air-interface signal transmission and reception to a peer UE (that is, the target terminal). The target terminal sends its own capability information to the first terminal to determine the positioning capability of the target terminal and the positioning capability of the first terminal. Both the first terminal and the target terminal may negotiate to determine a corresponding positioning manner according to the positioning capabilities of both parties; for example, according to parameters such as the capabilities of signal transmission and signal reception of the both parties and the bandwidth, a positioning manner that meets the requirements of both parties is determined.

Optionally, the method further includes: sending a first signal resource to the target terminal; and receiving a second signal resource sent by the target terminal. The first signal resource is a resource for the first terminal to send a first SL-PRS, and the second signal resource is a resource for the first terminal to receive the second SL-PRS. In this embodiment, the first terminal and the target terminal may provide their own transmission signal resources to each other, so that the first terminal and the target terminal receive or send positioning signals at corresponding resource positions.

The following describes an execution process of the positioning method in case that the service type is a relative-position request service between the first terminal and the target terminal by using specific embodiments. As shown in FIG. 7, the first terminal is the source UE, that is, the UE A, the target terminal is the UE B, the method includes following steps.

Step 70: the UE A initiates a Device to Device (D2D) Mobile Originating-Location Request (MO-LR) based on a sidelink interface to the UE B, that is, a Device to Device Mobile Originating-Location Request (D2D-MO-LR), and requests to establish a D2D positioning service and a relative positioning service with the opposite end, and optionally, the service request includes a privacy check request. Optionally, the UE B returns a privacy check to agree on the D2D-MO-LR service request.

Step 71: the UE A sends positioning capability information to provide its own air interface capability of signal transmission and signal reception to the UE B.

Step 72: the UE B sends its own capability information to the UE A to determine the positioning capabilities of both the UE A and the UE B.

Step 73: optionally, the UE B and the UE A negotiate to determine a corresponding positioning method according to the positioning capabilities of both parties.

Step 74: optionally, the UE A and the UE B provide signal transmission resources to each other.

Step 75: optionally, the UE B and the UE A send periodic positioning signals (SL-PRS) according to the resource configuration, and start receiving the positioning signals.

Step 76: the UE A and the UE B respectively measure SL-PRS signals received and sent on their own; and one or more of the following measurement information may be obtained:
a) time difference between signal reception and signal transmission of a terminal (UE A, UE B);
b) a RSRP value of receiving a signal from an opposite end (UE B, UE A) by a terminal (UE A, UE B);
c) a direction angle value of receiving a signal from an opposite end (UE B, UE A) by a terminal (UE A, UE B);
d) a direction angle of transmitting a signal (UE A, UE B).

Step 77: the UE B sends the measurement value to the UE A; optionally, the UE A may send the measurement value obtained by the UE A to the UE B, and both the UE A and the UE B obtain the measurement value from the opposite end.

Step 78: the UE A calculates a relative distance and a relative direction between the UE A and the UE B according to the measurement value obtained by the UE A and the measurement value sent by the UE B.

Step 79: optionally, the UE B calculates the relative distance and the relative direction between the UE A and the UE B according to the measurement value obtained by the UE B and the measurement value sent by the UE A, and sends the relative distance and the relative direction to the UE A for the UE A to refer to, and this relative positioning ends.

In the embodiments of the present disclosure, the first terminal executes the D2D positioning service with the target terminal based on the sidelink communication interface to obtain the relative position information between the first terminal and the target terminal, and can provide a continuous, reliable and high-precision positioning service in an area where the GNSS signal or the cellular network signal is unreachable or weak.

Optionally, the first terminal performs, based on a sidelink communication interface, a D2D positioning service with a target terminal, where the first terminal obtains an absolute position of the first terminal, and the absolute position may be calculated by the first terminal or may be obtained through calculation of the target terminal and the target terminal sends the absolute position of the first terminal to the first terminal; and the absolute position of the first terminal may also be calculated by a network side device (for example, a network server), and the absolute position of the first terminal is sent to the first terminal by the network side device, which are respectively described below by using specific embodiments.

In an optional embodiment, the absolute position of the first terminal is obtained by the first terminal though calculation, and performing a process of the absolute-position request service the first terminal includes:
sending a first SL-PRS to the target terminal, where the first SL-PRS may be sent by using a first signal resource;
receiving a second SL-PRS sent by the target terminal, where the second SL-PRS may be received through the second signal resource;
respectively measuring the first SL-PRS and the second SL-PRS to obtain first measurement information;
receiving second measurement information sent by the target terminal and absolute position information of the target terminal;
determining absolute position information of the first terminal according to the first measurement information, the second measurement information, and the absolute position information of the target terminal.

Optionally, determining the absolute position information of the first terminal according to the first measurement information, the second measurement information, and the absolute position information of the target terminal includes:
determining relative position information between the first terminal and the target terminal according to the first measurement information and the second measurement information; and determining the absolute position information of the first terminal according to the relative position information and the absolute position information of the target terminal.

In this embodiment, the first terminal requests its own absolute position (UE-based) based on the sidelink communication interface, that is, the MO-LR based on SL. The method may be applied to a scenario without a GNSS signal in an indoor/tunnel scenario. A sidelink communication positioning (SL-positioning) is used to obtain its own absolute position. The target terminal may be a Road Side Unit (RSU), and the source UE completes acquisition of its own absolute position information through interaction with the RSU. In this embodiment, the source UE itself perform calculation to obtain its own absolute position (i.e. UE-based).

The first terminal and the target terminal send periodic positioning signals to each other and turn on reception of the positioning signals; the first terminal and the target terminal respectively measure positioning signals received and sent by the first terminal and the target terminal, respectively, to obtain corresponding measurement information, that is, the first terminal measures the first SL-PRS sent by the first terminal and the received second SL-PRS to obtain the first measurement information; the target terminal measures the second SL-PRS sent by the target terminal and the received first SL-PRS to obtain the second measurement information, and sends the second measurement information to the first terminal; optionally, the target terminal sends its own absolute position to the first terminal.

Optionally, the first terminal calculates a relative position between the first terminal and a target terminal according to the first measurement information and the second measurement information, where the relative position may include a relative distance and a relative direction; and the first terminal calculates an absolute position of the first terminal according to the relative position and an absolute position of the target terminal.

Optionally, the method further includes: sending first positioning capability information of the first terminal to the target terminal; receiving second positioning capability information of the target terminal sent by the target terminal; and determining a positioning manner according to the first positioning capability information and the second positioning capability information.

In this embodiment, the first terminal sends positioning capability information to provide its own air interface capability of signal transmission and signal reception to the target terminal. The target terminal sends its own capability information to the first terminal to determine the positioning capability of the target terminal and the positioning capability of the first terminal. Both the first terminal and the target terminal may negotiate to determine a corresponding positioning manner according to the positioning capabilities of both parties, for example, determine, according to parameters such as the capabilities of signal transmission and signal reception of both parties and the bandwidth, a positioning manner that meets the requirements of both parties.

Optionally, the method further includes: sending a first signal resource to the target terminal; and receiving a second signal resource sent by the target terminal. In this embodiment, the first terminal and the target terminal may provide their own transmission signal resources, so that the first terminal and the target terminal receive or send a positioning signal at a corresponding resource location.

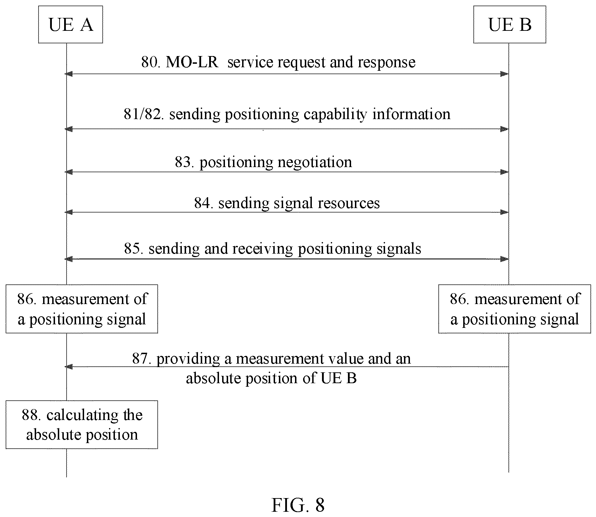

The following describes an execution process of the positioning method, by using a specific embodiment, when the service type is a absolute-position request service of the first terminal, and when the first terminal calculates its own absolute position information,. As shown in FIG. 8, the first terminal is the source UE, that is, the UE A, the target terminal is the UE B, the method includes following steps.

Step 80: the UE A initiates a Device to Device Mobile Originating-Location Request (D2D-MO-LR) to the UE B based on a sidelink interface to request to establish a D2D positioning service-absolute positioning service with the opposite end, and optionally, the service request includes a privacy check request. Optionally, the UE B returns a privacy check to agree on the D2D-MO-LR service request.

Steps 81-86 are the same as steps 71-76 in the foregoing embodiment, and details are not described herein again.

Step 87: the UE B sends the measurement value to the UE A; optionally, the UE B provides its own absolute position to the UE A.

Step 88: the UE A calculates the relative distance and the relative direction between the UE A and the UE B according to the measurement value obtained by the UE A and the measurement value sent by the UE B, and obtains the absolute position of the UE A through calculation according to the absolute position information of the UE B.

In the embodiments of the present disclosure, the first terminal performs the D2D positioning service with the target terminal based on the sidelink communication interface to obtain the absolute position information of the first terminal, and can provide a continuous, reliable and high-precision positioning service in an area where the GNSS signal or the cellular network signal is unreachable or weak.

In an optional embodiment, an absolute position of the first terminal is obtained through calculation by the target terminal. Executing a process of an absolute-position request service of the first terminal includes:
sending a first SL-PRS to the target terminal, where the first SL-PRS may be sent by using a first signal resource;
receiving a second SL-PRS sent by the target terminal, where the second SL-PRS may be received through a second signal resource;
respectively measuring the first SL-PRS and the second SL-PRS to obtain first measurement information;
sending the first measurement information to the target terminal;
receiving absolute position information of the first terminal sent by the target terminal through the sidelink communication interface; where the absolute position information of the first terminal is determined by the target terminal based on the first measurement information, the second measurement information of the target terminal, and the absolute position information of the target terminal.

In this embodiment, the first terminal requests its own absolute position (UE-based) based on the sidelink communication interface, that is, the MO-LR based on SL. The method may be applied to a scenario without a GNSS signal in an indoor/tunnel scenario. The SL-positioning is used to obtain its own absolute position. The target terminal may be an RSU, and the source UE completes acquisition of its own absolute position information through interaction with the RSU. In this embodiment, the target terminal calculates the absolute position of the first terminal, and sends the absolute position information of the first terminal to the first terminal through a sidelink communication interface.

The first terminal and the target terminal send periodic positioning signals to each other and turn on reception of the positioning signals; the first terminal and the target terminal respectively measure positioning signals received and sent by the first terminal and the target terminal to obtain corresponding measurement information, that is, the first terminal measures the first SL-PRS sent by the first terminal and the received second SL-PRS to obtain first measurement information, and sends the first measurement information to the target terminal through a sidelink communication interface; the target terminal measures a second SL-PRS sent by the target terminal and a received first SL-PRS to obtain the second measurement information; and the target terminal calculates a relative position between the first terminal and the target terminal according to the first measurement information and the second measurement information, calculates an absolute position of the first terminal based on the absolute position of the target terminal and the relative position; and the target terminal sends the absolute position of the first terminal to the first terminal through the sidelink communication interface.

Optionally, the method further includes: sending first positioning capability information of the first terminal to the target terminal; receiving second positioning capability information of the target terminal sent by the target terminal; and determining a positioning manner according to the first positioning capability information and the second positioning capability information. Optionally, the method further includes: sending the first signal resource to the target terminal; and receiving a second signal resource sent by the target terminal.

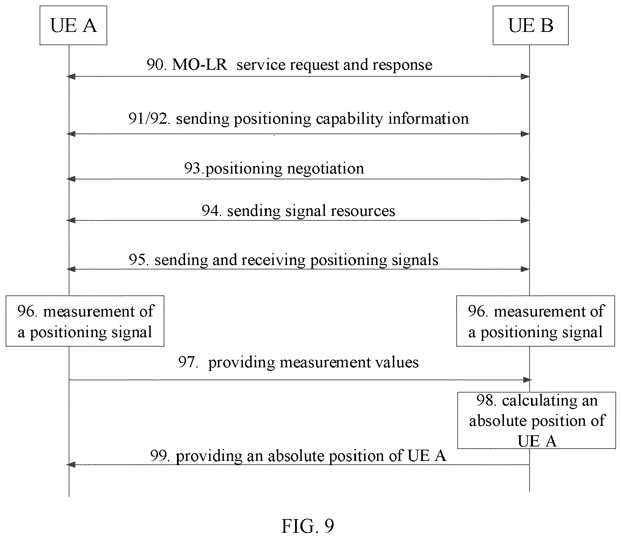

The following describes an execution process of the positioning method by using a specific embodiment, in case that the service type is a absolute-position request service of the first terminal, and in case that the target terminal calculates absolute position information of the first terminal,. As shown in FIG. 9, the first terminal is a source UE (UE A) and the target terminal is UE B, the method includes following steps.

Step 90: the UE A initiates a Device to Device Mobile Originating-Location Request (D2D-MO-LR) service request based on a sidelink interface to the UE B to request to establish a D2D positioning service-absolute positioning service with the opposite end, and optionally, the service request includes a privacy check request. Optionally, the UE B returns a privacy check to agree on the D2D-MO-LR service request.

Steps 91-96 are the same as steps 71-76 of the foregoing embodiments, and details are not described herein again.

Step 97: the UE A sends the measurement value to the UE B.

Step 98: the UE B calculates the relative distance and the relative direction between the UE A and the UE B according to the measurement value obtained by the UE B and the measurement value sent by the UE A, and calculates the absolute position of the UE A according to the absolute position information of the UE B.

Step 99: the UE B transmits the absolute position information of the UE A to the UE A through the sidelink communication interface, so as to reduce the computing load of the source UE (i.e. UE A) and avoid leakage of the absolute position of the UE B.

In an embodiment of the present disclosure, the first terminal performs an D2D positioning service with the target terminal based on the sidelink communication interface to obtain the absolute position information of the first terminal, the absolute position information of the first terminal is calculated by the target terminal and sent to the first terminal through the sidelink communication interface, a continuous, reliable and high-precision positioning service can be provided in the area where the GNSS signal or the cellular network signal is unreachable or weak, the calculation load of the first terminal can be reduced, and the absolute position of the target terminal is prevented from being leaked.

In an optional embodiment, an absolute position of the first terminal is obtained though calculation by a network-side device. executing a service process of requesting the absolution position of the first terminal includes:
sending a first SL-PRS to the target terminal, where the first SL-PRS may be sent by using a first signal resource;
receiving a second SL-PRS sent by the target terminal, where the second SL-PRS may be received through a second signal resource;
respectively measuring the first SL-PRS and the second SL-PRS to obtain first measurement information;
sending the first measurement information to the network side device;
receiving absolute position information of the first terminal sent by the network side device; where the absolute position information of the first terminal is determined by the network side device based on the first measurement information, the second measurement information of the target terminal, and the absolute position information of the target terminal.

In this embodiment, the first terminal requests its own absolute position (UE-based) based on the sidelink communication interface, that is, the MO-LR based on SL. The method may be applied to a scenario without a GNSS signal in an indoor/tunnel scenario. The SL-positioning is used to obtain its own absolute position. The target terminal may be an RSU, and the source UE completes acquisition of its own absolute position information through interaction with the RSU. If both the first terminal and the target terminal are in a cellular network scenario, the absolute position of the first terminal may be obtained through calculation by the network side device and is sent to the first terminal. The network side device may be a network server.

The first terminal and the target terminal send periodic positioning signals to each other and turn on reception of positioning signals; the first terminal and the target terminal respectively measure positioning signals received and sent by the first terminal and the target terminal to obtain corresponding measurement information, that is, the first terminal measures the first SL-PRS sent by the first terminal and the received second SL-PRS to obtain first measurement information, and sends the first measurement information to the network side device; the target terminal measures the second SL-PRS sent by the target terminal and the received first SL-PRS, obtains the second measurement information, and sends the second measurement information to the network side device; optionally, the target terminal sends its own absolute position information to the network side device. The network side device calculates a relative position between the first terminal and the target terminal based on the first measurement information and the second measurement information, and calculates the absolute position of the first terminal based on the absolute position of the target terminal and the relative position; and the network side device sends the absolute position of the first terminal to the first terminal.

Optionally, the method further includes: sending a second positioning request message to the network side device, where the second positioning request message includes identification information of the first terminal and identification information of the target terminal; and receiving a positioning response message sent by the network side device.

In this embodiment, the first terminal initiates an D2D positioning service request to the network-side device, and an identifier of the first terminal and an identifier of the peer UE (that is, a target terminal) are included in the second positioning request message. The network-side device determines, based on the second positioning request message, that the first terminal and the target terminal perform the D2D positioning service.

Optionally, the method further includes: sending first positioning capability information of the first terminal to the network side device. The first terminal provides its own positioning capability information to the network side device, and provides its own air interface capability of signal transmission and signal reception. The target terminal may also send its own capability information to the network-side device, so that the network-side device completes the determination of the positioning capabilities of the first terminal and the target terminal.

Optionally, the method further includes: sending a first signal resource to the target terminal and the network side device; and receiving a second signal resource of the target terminal sent by the network side device. In this embodiment, the first terminal sends to the network side device the resource configuration of the positioning signal sent by the first terminal, and the network side device sends to the first terminal the resource configuration of the positioning signal sent by the target terminal, so that the first terminal and the target terminal receive or send the positioning signal at the corresponding resource position.

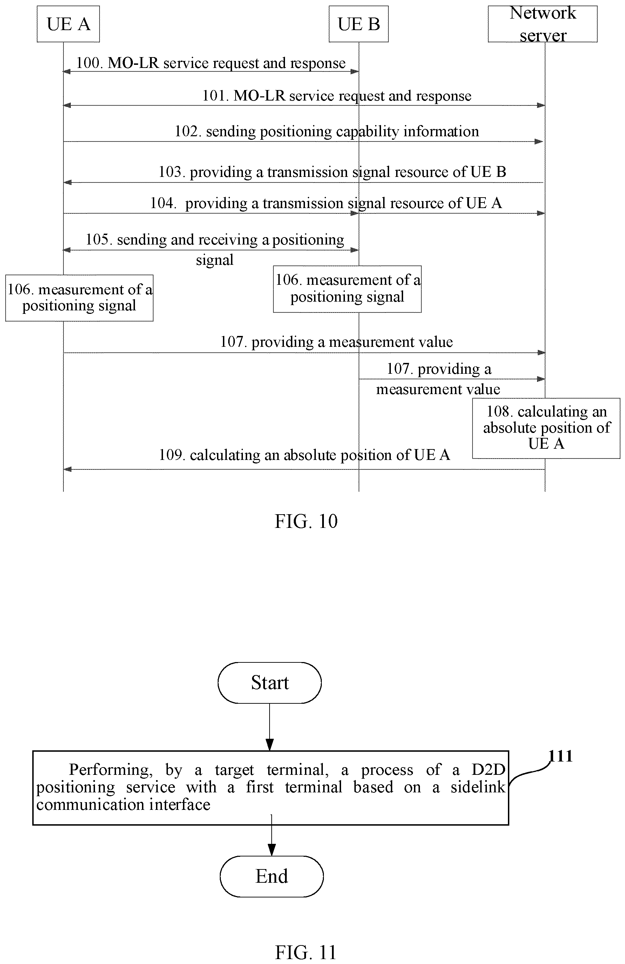

The following describes an execution process of the positioning method by using a specific embodiment, in case that the service type is a request service of the absolute location of the first terminal, and in case that the network side device calculates absolute location information of the first terminal (that is, UE-Assisted). As shown in FIG. 10, the first terminal is a source UE (UE A), the target terminal is the UE B, and the network side device is a network server, the method includes following steps.

Step 100: the UE A initiates a Device to Device Mobile Originating-Location Request (D2D-MO-LR) service request based on a sidelink interface to the UE B to request to establish a D2D positioning service-absolute positioning service with the opposite end, and optionally, the service request includes a privacy check request. Optionally, the UE B returns a privacy check to agree on the D2D-MO-LR service request.

Step 101: UE A initiates the D2D-MO-LR service request to a network server, including identification information of UE A and UE B; optionally, receives a response message sent by the network server.

Step 102: the UE A provides positioning capability information to the network server.

Step 103: the network server provides an SL-PRS positioning signal resource of the UE B to the UE A.

Step 104: the UE A provides its own transmission signal resource configuration to the UE B and the network server.

Step 105: the UE A sends a periodic positioning signal (SL-PRS) according to the resource configuration, and starts to receive the positioning signal.

Step 106: the UE A and the UE B respectively measure the SL-PRS signals received and sent by the UE A and the UE B.

Optionally, the method may further include: measuring Reference Signal Time Difference (RSTD) of the positioning signals sent by the plurality of peer UEs.

Step 107: the UE A and the UE B send the measurement values to the network server; optionally, the UE B sends its own absolute position to the network server.

Step 108: the network server calculates the relative position between the UE A and the target UE according to the measurement values of the UE A and the UE B, and obtains, through calculation, the absolute position information of the UE A in combination with the known absolute position information of the UE B.

Step 109: the network server provides absolute position information of the UE A to the UE A to complete the positioning request.

In an embodiment of the present disclosure, the first terminal performs an D2D positioning service with the target terminal based on the sidelink communication interface to obtain absolute position information of the first terminal, and the absolute position information of the first terminal is calculated by the network server and sent to the first terminal, so that a continuous, reliable and high-precision positioning service can be provided in an area where the GNSS signal is unreachable or weak, and a calculation load of the first terminal can be reduced, thereby avoiding leakage of the absolute position of the target terminal.

In an optional embodiment, for the third service type, that is, the first terminal obtains the absolute position of the target terminal. Optionally, executing a process of the absolute-position request service of the target terminal includes:
sending a third positioning request message to the target terminal, where the third positioning request message is used to indicate that the first terminal is to establish an absolute positioning service with the target terminal;
receiving a positioning response message sent by the target terminal;
receiving, in a case that the positioning response message indicates that the target terminal accepts the absolute positioning service, absolute position information of the target terminal sent by the target terminal.

In this embodiment, the first terminal initiates an D2D positioning service request based on a sidelink communication interface to the target terminal, requests to establish a positioning service with the target terminal, obtains an absolute position of the target terminal, and optionally, the third positioning request message includes a privacy check request; the target terminal executes a privacy check according to the privacy check request, determines whether to receive the positioning service request, and feeds back the positioning response message; and if the target terminal agrees to the positioning service request, the target terminal sends its own absolute position information to the first terminal to complete the service request.

In this embodiment, the first terminal performs the D2D positioning service with the target terminal based on the sidelink communication interface to obtain the absolute position information of the target terminal, and can provide a continuous, reliable and high-precision positioning service in an area where the GNSS signal or the cellular network signal is unreachable or weak.

In the embodiments of the present disclosure, the first terminal obtains the positioning-related information based on the sidelink communication interface, determines the target terminal initiating the positioning service according to the positioning-related information, and initiates an D2D positioning service to the target terminal based on the sidelink communication interface, so that a continuous, reliable and high-precision positioning service can be provided in an area where the GNSS signal or the cellular network signal is unreachable or weak.

As shown in FIG. 11, an embodiment of the present disclosure further provides a positioning method applied to a target terminal. The method includes following steps.

Step 111: the target terminal performs an D2D positioning service process with the first terminal based on the sidelink communication interface.

In this embodiment, the first terminal may be a source terminal, that is, a source radio identifier transmitter. The first terminal obtains positioning-related information through a sidelink communication interface, and determines, according to the positioning-related information, a target terminal that can initiate a positioning service. The first terminal initiates a positioning service request to the target terminal, where the target terminal performs a D2D positioning service with the first terminal.

In the embodiments of the present disclosure, the target terminal and the first terminal perform the D2D positioning service based on the sidelink communication interface, and can provide a continuous, reliable and high-precision positioning service in an area where the GNSS signal or the cellular network signal is unreachable or weak.

In an optional embodiment, the first terminal obtains positioning-related information based on a sidelink communication interface, and the method further includes:
Manner 1: receiving, through a sidelink communication interface, a service request message broadcast by the first terminal; and sending first positioning-related information to the first terminal based on the sidelink communication interface according to the service request message; and/or
Manner 2: sending second positioning-related information based on the sidelink communication interface.

For the manner 1, the first terminal first broadcasts its own service request, and broadcasts the broadcast information through the sidelink interface, where the service request message may include at least one of the following:
1. identification information of the first terminal;
2. a service type of the requested positioning service, for example, a relative position between the first terminal and the opposite UE is requested, an absolute position of the first terminal is requested, an absolute position of the opposite UE of the first terminal is requested, and the like;
3. a Quality of Service (QoS) indicator requirement of the positioning service, for example, the positioning accuracy and the confidence interval, the allowed delay of the positioning, the integrity requirement, and the like.

After receiving the service request from the first terminal, the target terminal determines whether to accept a positioning service related request of the target terminal; if accept, then return acknowledge information to the target terminal, where the acknowledge information includes the first positioning-related information; and the first terminal determines the target terminal initiating the service, based on the first positioning-related information.

Optionally, the first positioning-related information includes at least one of the following:
1. identification information of the target terminal (that is, the target terminal);
2. a service type accepted by the target terminal (that is, the target terminal);
3. QoS update advice of the positioning service, for example, the positioning accuracy and the confidence interval, the allowed delay of positioning, the integrity requirement, and the like;
4. a received signal power of the target terminal; which is configured to indicate a received signal strength of the target terminal for the first terminal to perform screening, and determine, from a plurality of second terminals, the target terminal initiating the positioning service request.

In the second manner, the target terminal may broadcast the broadcast information through a sidelink interface, where the broadcast information includes second positioning-related information of the target terminal. The second positioning-related information may include at least one of the following:
1. identification information of the target terminal;
2. a service type supported by the target terminal, that is, a service type that can be currently supported by the target terminal, for example, the target terminal may support a related service of a relative position between the target terminal and the opposite UE (that is, the first terminal); or the target terminal may provide a service type such as an absolute position of the UE;
3. QoS indicator requirement of the positioning service: the QoS indicator requirement may be QoS indicator requirement corresponding to the service type supported by the target terminal.

It should be noted that, because the target terminal is determined by the first terminal from the plurality of second terminals, the target terminal is one or more of the second terminals, and in this embodiment, in the first positioning-related information and the second positioning-related information, the information of the target terminal is information of the second terminal.

In an optional embodiment, the performing an D2D positioning service process with the first terminal includes at least one of the following:
performing a process of the relative-position request service between the first terminal and the target terminal;
performing a process of the absolute-position request service of the first terminal;
performing a process of the absolute-position request service of the target terminal.

In this embodiment, the service type of the positioning service may include at least one of the following:
a service type 1 which is a service requesting the relative position between the first terminal and the target terminal; that is, the first terminal obtains a relative position between the first terminal and the opposite UE;
a service type 2 which is a service requesting the absolute position of the first terminal; that is, the first terminal obtains its own absolute position;
a service type 3 which is a service requesting the absolute position of the target terminal; that is, the first terminal obtains the absolute position of the opposite UE.

The implementation process of the positioning method according to the embodiments of the present disclosure is described below for different service types, respectively.

In an optional embodiment, for the service type 1 and/or the service type 2, that is, the first terminal obtains the relative position between the first terminal and the peer UE, and/or the first terminal obtains the absolute position of the first terminal. Optionally, performing an D2D positioning service process with the first terminal based on the sidelink communication interface includes following steps.

Step 1: receiving a first positioning request message sent by the first terminal. The D2D positioning service includes: a relative-position request service between the first terminal and the target terminal, and/or a absolute-position request service of the first terminal.

In case that the D2D positioning service is a relative-position request service between the first terminal and the target terminal, the first positioning request message is used to instruct the first terminal and the target terminal to establish a relative positioning service; and in case that the D2D positioning service is a absolute-position request service of the first terminal, the first positioning request message is used to instruct the first terminal and the target terminal to establish an absolute positioning service.
Step 2: determining to accept the relative positioning service according to the first positioning request message;
Step 3: sending a positioning response message to the first terminal;
Step 4: perform the D2D positioning service process.

In this embodiment, the first terminal initiates the D2D positioning request to the target terminal, and sends the first positioning request message. After receiving the first positioning request message, the target terminal determines whether to accept the D2D positioning service and return a positioning response message; and if the target terminal accepts the D2D positioning service, the target terminal performs the D2D positioning service process with the first terminal.

Optionally, the first positioning request message includes a privacy check request, and after receiving the first positioning request message by the target terminal, the target terminal executes a privacy check process to determine whether to accept the D2D positioning service and returns a positioning response message.

Optionally, executing the process of the relative-position request service between the first terminal and the target terminal includes:
receiving a first SL-PRS sent by the first terminal;
sending a second SL-PRS to the first terminal;
respectively measuring the first SL-PRS and the second SL-PRS to obtain second measurement information;
sending the second measurement information to the first terminal.

In this embodiment, the target terminal and the first terminal send periodic positioning signals to each other, and start to receive positioning signals; the first terminal and the target terminal respectively measure positioning signals received and sent by the first terminal and the target terminal to obtain corresponding measurement information, that is, the target terminal measures the second SL-PRS sent by the target terminal and the received first SL-PRS to obtain the second measurement information, and sends the second measurement information to the first terminal; and the first terminal measures the first SL-PRS sent by the first terminal and the received second SL-PRS to obtain the first measurement information.

The first terminal calculates the relative position between the first terminal itself and the target terminal according to the first measurement information and the second measurement information, where the relative position may include a relative distance and a relative direction.

Optionally, the method further includes:
receiving first measurement information sent by the first terminal; determining second information of the relative position between the first terminal and the target terminal according to the first measurement information and the second measurement information; and sending the second information of the relative position to the first terminal.

In this embodiment, after obtaining the first measurement information, the first terminal may send the first measurement information to the target terminal, and the target terminal calculates the relative position between the first terminal and the target terminal according to the first measurement information and the second measurement information obtained by the target terminal, and sends the relative position to the first terminal, so that the first terminal uses the relative position as a reference to determine the accuracy of the relative position, thereby avoiding a large error and improving positioning accuracy.

Optionally, the specific information content included in the first measurement information and the second measurement information is the same as the method embodiment applied to the first terminal, and details are not described herein again.

Optionally, the method further includes: receiving first positioning capability information sent by the first terminal; and sending second positioning capability information to the first terminal.

In this embodiment, the first terminal sends positioning capability information to provide its own capability of air-interface signal transmission and signal reception to the target terminal. The target terminal sends its own capability information to the first terminal to determine the positioning capabilities of the target terminal and the first terminal. Both the first terminal and the target terminal may negotiate to determine a corresponding positioning manner according to the positioning capabilities of both parties, for example, determine, according to parameters such as the capability of signal transmission and signal reception of both parties and bandwidth, a positioning manner that meets the requirements of both parties.

Optionally, the method further includes: receiving a first signal resource sent by the first terminal; and sending a second signal resource to the first terminal. In this embodiment, the first terminal and the target terminal may provide their own transmission signal resources to each other, so that the first terminal and the target terminal receive or send positioning signals at corresponding resource positions.

In the embodiments of the present disclosure, the first terminal executes the D2D positioning service with the target terminal based on the sidelink communication interface to obtain the relative position information between the first terminal and the target terminal, and can provide a continuous, reliable and high-precision positioning service in an area where the GNSS signal or the cellular network signal is unreachable or weak.

The first terminal performs an D2D positioning service with a target terminal based on a sidelink communication interface, where the first terminal obtains an absolute position of the first terminal itself, and the absolute position may be obtained through calculation by the first terminal or may be obtained through calculation by the target terminal and the target terminal sends the absolute position of the first terminal to the first terminal; and the absolute position of the first terminal may also be obtained through calculation by a network side device (for example, a network server), and the absolute position of the first terminal is sent to the first terminal, which is respectively described below by using specific embodiments.

In an optional embodiment, executing the process of requesting a service of an absolute position of the first terminal includes:
receiving a first SL-PRS sent by the first terminal;
sending a second SL-PRS to the first terminal;
respectively measuring the first SL-PRS and the second SL-PRS to obtain second measurement information;
sending the second measurement information and absolute position information of the target terminal to the first terminal.

In this embodiment, the first terminal requests its own absolute position based on the sidelink communication interface. The method may be applied to a scenario without a GNSS signal in an indoor/tunnel scenario. The SL-positioning is used to obtain its own absolute position. The target terminal may be an RSU, and the source UE completes acquisition of its own absolute position information through interaction with the RSU. In this embodiment, the source UE itself obtains its own absolute position through calculation.

The first terminal and the target terminal send periodic positioning signals to each other and turn on reception of positioning signals; the first terminal and the target terminal respectively measure positioning signals received and sent by the first terminal and the target terminal, respectively, to obtain corresponding measurement information, that is, the first terminal measures the first SL-PRS sent by the first terminal and the received second SL-PRS to obtain the first measurement information; the target terminal measures the second SL-PRS sent by the target terminal and the received first SL-PRS to obtain the second measurement information, and sends the second measurement information and the absolute position of the target terminal to the first terminal.

The first terminal calculates a relative position between the first terminal and a target terminal according to the first measurement information and the second measurement information, where the relative position may include a relative distance and a relative direction; and the first terminal calculates an absolute position of the first terminal according to the relative position and an absolute position of the target terminal.

Optionally, the method further includes: receiving first positioning capability information sent by the first terminal; and sending second positioning capability information to the first terminal.

In this embodiment, the first terminal sends positioning capability information to provide its own capability of air-interface signal transmission and signal reception to the target terminal. The target terminal sends its own capability information to the first terminal to determine the positioning capabilities of the target terminal and the first terminal. Both the first terminal and the target terminal may negotiate to determine a corresponding positioning manner according to the positioning capabilities of both parties.

Optionally, the method further includes: receiving the first signal resource sent by the first terminal; and sending a second signal resource to the first terminal. In this embodiment, the first terminal and the target terminal may provide their own transmission signal resources, so that the first terminal and the target terminal receive or send a positioning signal at a corresponding resource location.

In the embodiments of the present disclosure, the first terminal performs the D2D positioning service with the target terminal based on the sidelink communication interface to obtain the absolute position information of the first terminal, and can provide a continuous, reliable and high-precision positioning service in an area where the GNSS signal or the cellular network signal is unreachable or weak.

In an optional embodiment, executing the process of requesting a service of the absolute position of the first terminal includes:
receiving a first SL-PRS sent by the first terminal;
sending a second SL-PRS to the first terminal;
respectively measuring the first SL-PRS and the second SL-PRS to obtain second measurement information;
receiving first measurement information sent by the first terminal;
determining absolute position information of the first terminal according to the first measurement information, the second measurement information, and the absolute position information of the target terminal;
sending the absolute position information of the first terminal to the first terminal through the sidelink communication interface.

Optionally, determining the absolute position information of the first terminal according to the first measurement information, the second measurement information, and the absolute position information of the target terminal includes:
determining relative position information between the first terminal and the target terminal according to the first measurement information and the second measurement information;
determining absolute position information of the first terminal according to the relative position information and the absolute position information of the target terminal.

In this embodiment, the first terminal requests its own absolute position based on the sidelink communication interface. The method may be applied to a scenario without a GNSS signal in an indoor/tunnel scenario. The SL-positioning is used to obtain its own absolute position. The target terminal may be an RSU, and the source UE completes acquisition of its own absolute position information through interaction with the RSU. In this embodiment, the target terminal calculates the absolute position of the first terminal, and sends the absolute position information of the first terminal to the first terminal through a sidelink communication interface.

The first terminal and the target terminal send periodic positioning signals to each other and turn on reception of positioning signals; the first terminal and the target terminal respectively measure positioning signals received and sent by the first terminal and the target terminal to obtain corresponding measurement information, that is, the first terminal measures the first SL-PRS sent by the first terminal and the received second SL-PRS to obtain first measurement information, and sends the first measurement information to the target terminal through a sidelink communication interface; the target terminal measures a second SL-PRS sent by the target terminal and a received first SL-PRS to obtain the second measurement information; and the target terminal calculates a relative position between the first terminal and the target terminal according to the first measurement information and the second measurement information, calculating an absolute position of the first terminal based on the absolute position of the target terminal and the relative position; and the target terminal sends the absolute position of the first terminal to the first terminal through the sidelink communication interface.

Optionally, the method further includes: receiving first positioning capability information sent by the first terminal; and sending second positioning capability information to the first terminal. The method further includes: receiving the first signal resource sent by the first terminal; and sending a second signal resource to the first terminal.

In an embodiment of the present disclosure, the first terminal performs an D2D positioning service with the target terminal based on the sidelink communication interface to obtain the absolute position information of the first terminal, the absolute position information of the first terminal is calculated by the target terminal and sent to the first terminal through the sidelink communication interface, so that a continuous, reliable and high-precision positioning service can be provided in the area where the GNSS signal or the cellular network signal is unreachable, the calculation load of the first terminal can be reduced, and the absolute position of the target terminal is prevented from being leaked.

In an optional embodiment, executing the process of the absolute-position request service of the first terminal includes:
receiving a first SL-PRS sent by the first terminal;
sending a second SL-PRS to the first terminal;
respectively measuring the first SL-PRS and the second SL-PRS to obtain second measurement information;
sending the second measurement information and the absolute position information of the target terminal to a network side device.

In this embodiment, the first terminal requests its own absolute position based on the sidelink communication interface. The method may be applied to a scenario without a GNSS signal in an indoor/tunnel scenario. The SL-positioning is used to obtain its own absolute position. The target terminal may be an RSU, and the source UE completes acquisition of its own absolute position information through interaction with the RSU. If the first terminal and the target terminal are both in a cellular network scenario, an absolute position of the first terminal may be calculated by the network side device and the network side device sends the absolute position to the first terminal. The network side device may be a network server.

The first terminal and the target terminal send periodic positioning signals to each other and turn on reception of positioning signals; the first terminal and the target terminal respectively measure positioning signals received and sent by the first terminal and the target terminal to obtain corresponding measurement information, that is, the first terminal measures the first SL-PRS sent by the first terminal and the received second SL-PRS to obtain first measurement information, and sends the first measurement information to the network side device; the target terminal measures the second SL-PRS sent by the target terminal and the received first SL-PRS and obtains the second measurement information, and sends the second measurement information and the absolute position information of the target terminal to the network side device.

The network side device calculates a relative position between the first terminal and the target terminal based on the first measurement information and the second measurement information, and calculates an absolute position of the first terminal based on the absolute position of the target terminal and the relative position; and the network side device sends the absolute position of the first terminal to the first terminal.

In an embodiment of the present disclosure, the first terminal performs an D2D positioning service with the target terminal based on the sidelink communication interface to obtain absolute position information of the first terminal, and the absolute position information of the first terminal is calculated by the network side device and sent to the first terminal, so that a continuous, reliable and high-precision positioning service can be provided in an area where the GNSS signal is unreachable or weak, and a calculation load of the first terminal can be reduced, thereby avoiding leakage of an absolute position of the target terminal.

In an optional embodiment, for the service type 3, that is, the first terminal obtains the absolute position of the target terminal. Optionally, executing the process of the absolute-position request service of the target terminal includes:
receiving a third positioning request message sent by the first terminal, where the third positioning request message is used to instruct that the first terminal is to establish an absolute positioning service with the target terminal;
determining to accept the relative positioning service according to the third positioning request message;
sending the absolute position information of the target terminal to the first terminal.

In this embodiment, the first terminal initiates an D2D positioning service request based on a sidelink communication interface to the target terminal, requests to establish a positioning service with the target terminal, obtains an absolute position of the target terminal, and optionally, the third positioning request message includes a privacy check request; the target terminal executes a privacy check according to the privacy check request, determines whether to accept the positioning service request, and feeds back a positioning response message; and if the target terminal agrees to the positioning service request, then the target terminal sends its own absolute position information to the first terminal to complete the service request.

In the embodiments of the present disclosure, the target terminal and the first terminal perform the D2D positioning service based on the sidelink communication interface, and can provide a continuous, reliable and high-precision positioning service in an area where the GNSS signal or the cellular network signal is unreachable or weak.

It should be noted that the foregoing positioning method applied to the target terminal provided by the embodiments of the present disclosure can implement all the method steps implemented by the target terminal in the method embodiment applied to the first terminal, and can achieve the same technical effect, which is not described in detail herein.

The above embodiments are described with respect to the positioning method of the present disclosure, and the following embodiments will be further described with reference to the accompanying drawings.

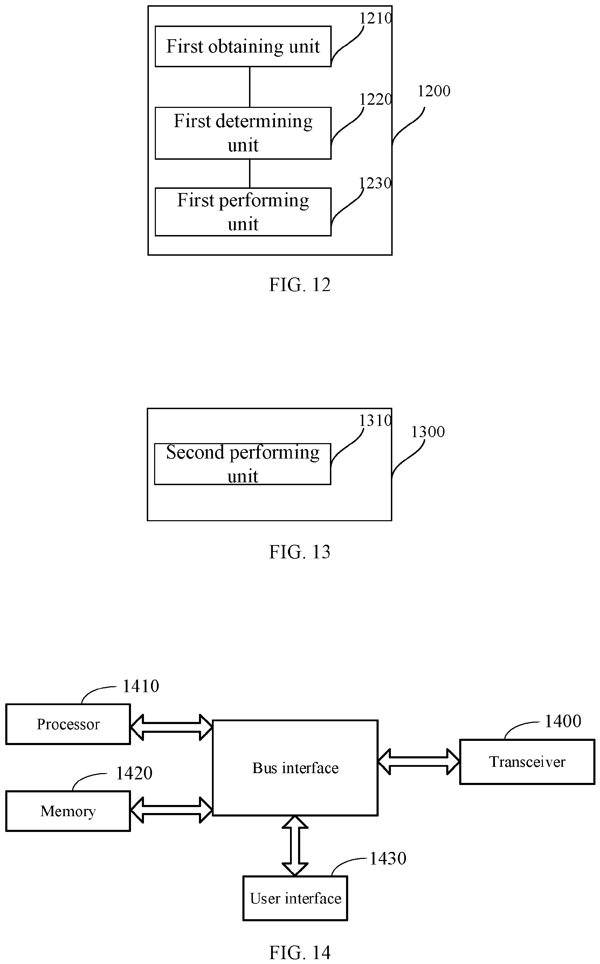

Specifically, as shown in FIG. 12, an embodiment of the present disclosure provides a positioning apparatus 1200 applied to a first terminal. The positioning apparatus 1200 includes:
a first obtaining unit 1210, configured to obtain positioning-related information based on a sidelink communication interface;
a first determining unit 1220, configured to determine, according to the positioning-related information, a target terminal initiating an D2D positioning service;
a first performing unit 1230, configured to perform an D2D positioning service process with the target terminal through a sidelink communication interface.

Optionally, the first obtaining unit is specifically configured to:
broadcast a service request message of the first terminal through a sidelink communication interface; receive first positioning-related information sent by a second terminal through the sidelink communication interface;
   and/or
monitoring second positioning-related information sent by the second terminal through the sidelink communication interface.

Optionally, the service request message includes at least one of the following:
identification information of the first terminal;
a service type of the requested positioning service;
Quality of Service (QoS) indicator requirements of the positioning service.

Optionally, the first positioning-related information includes at least one of the following:
identification information of the second terminal;
a service type accepted by the second terminal;
a QoS update suggestion of the location service;
a received signal power of the second terminal.

Optionally, the second positioning-related information includes at least one of the following:
identification information of the second terminal;
a service type supported by the second terminal;
QoS indicator requirement of the positioning service.

Optionally, the first performing unit may be configured to perform at least one of the following operations:
performing a process of the relative-position request service between the first terminal and the target terminal;
performing a process of an absolute-position request service of the first terminal;
performing a process of an absolute-position request service of the target terminal.

Optionally, the first performing unit includes:
a first sending subunit, configured to send a first positioning request message to the target terminal through the sidelink communication interface;
a first receiving subunit, configured to receive a positioning response message sent by the target terminal;
a first performing subunit, configured to: in case that the positioning response message indicates that the target terminal accepts the D2D positioning service, perform the D2D positioning service process;
wherein the D2D positioning service includes: a relative-position request service between the first terminal and the target terminal, and/or a absolute-position request service of the first terminal.

Optionally, the first performing subunit is specifically configured to:
send a first sidelink positioning reference signal SL-PRS to the target terminal;
receive a second SL-PRS sent by the target terminal;
respectively measure the first SL-PRS and the second SL-PRS to obtain first measurement information;
receive second measurement information sent by the target terminal;
determine first relative position information between the first terminal and the target terminal according to the first measurement information and the second measurement information.

Optionally, the apparatus further includes:
a second sending unit, configured to send the first measurement information to the target terminal;
a second receiving unit, configured to receive second information of the relative position between the first terminal and the target terminal sent by the target terminal;
wherein the second information of the relative position is determined by the target terminal according to the first measurement information and the second measurement information.

Optionally, the first performing subunit is specifically configured to:
send a first SL-PRS to the target terminal;
receive a second SL-PRS sent by the target terminal;
respectively measure the first SL-PRS and the second SL-PRS to obtain first measurement information; and
receive second measurement information sent by the target terminal and absolute position information of the target terminal;
determine absolute position information of the first terminal according to the first measurement information, the second measurement information, and the absolute position information of the target terminal.

Optionally, the first performing subunit is specifically configured to:
send a first SL-PRS to the target terminal;
receive a second SL-PRS sent by the target terminal;
respectively measure the first SL-PRS and the second SL-PRS to obtain first measurement information;
send the first measurement information to the target terminal;
receive the absolute position information of the first terminal sent by the target terminal through the sidelink communication interface;
wherein absolute position information of the first terminal is determined by the target terminal based on the first measurement information, the second measurement information of the target terminal, and the absolute position information of the target terminal.

Optionally, the first performing subunit is specifically configured to:
send a first SL-PRS to the target terminal;
receive a second SL-PRS sent by the target terminal;
respectively measure the first SL-PRS and the second SL-PRS to obtain first measurement information;
send the first measurement information to a network side device;
receive absolute position information of the first terminal sent by the network side device;
wherein the absolute position information of the first terminal is determined by the network side device based on the first measurement information, the second measurement information of the target terminal, and the absolute position information of the target terminal.

Optionally, the first measurement information includes at least one of the following:
time difference between first time when the first terminal sends the first SL-PRS and second time when the first terminal receives the second SL-PRS;
a reference signal received power of the second SL-PRS received by the first terminal;
a direction angle value of receiving the second SL-PRS by the first terminal;
a direction angle value of sending the first SL-PRS by the first terminal.

Optionally, the second measurement information includes at least one of the following:
time difference between third time when the target terminal sends a second SL-PRS, and fourth time when the target terminal receives the first SL-PRS;
a RSRP value of the first SL-PRS received by the target terminal;
a direction angle value of receiving the first SL-PRS by the target terminal;
a direction angle value of sending the second SL-PRS by the target terminal.

Optionally, the apparatus further includes:
a third sending unit, configured to send a first signal resource to the target terminal;
a third receiving unit, configured to receive a second signal resource sent by the target terminal.

Optionally, the apparatus further includes:
a fourth sending unit, configured to send first positioning capability information of the first terminal to the target terminal;
a fourth receiving unit, configured to receive second positioning capability information of the target terminal sent by the target terminal;
a third determining unit, configured to determine a positioning manner according to the first positioning capability information and the second positioning capability information.

Optionally, the apparatus further includes:
a fifth sending unit, configured to send a first signal resource to the target terminal and the network side device;
a fifth receiving unit, configured to receive a second signal resource of the target terminal sent by the network side device.

Optionally, the apparatus further includes:
a sixth sending unit, configured to send the first positioning capability information of the first terminal to the network side device.

Optionally, the apparatus further includes:
a seventh sending unit, configured to send a second positioning request message to the network side device, where the second positioning request message includes identification information of the first terminal and identification information of the target terminal;
a sixth receiving unit, configured to receive a positioning response message sent by the network side device.

Optionally, the first performing unit includes:
a second sending subunit, configured to send a third positioning request message to the target terminal, where the third positioning request message is configured to indicate that the first terminal is to establish an absolute positioning service with the target terminal;
a second receiving subunit, configured to receive a positioning response message sent by the target terminal;
a third receiving subunit, configured to: in case that the positioning response message indicates that the target terminal accepts the absolute positioning service, receive absolute position information of the target terminal sent by the target terminal.

It should be noted that, the foregoing apparatus provided in the embodiments of the present disclosure can implement all the method steps implemented by the foregoing method embodiments applied to the first terminal, and can achieve the same technical effect, and details and beneficial effects that are the same as those of the method embodiments in this embodiment are not described herein again.

Specifically, as shown in FIG. 13, an embodiment of the present disclosure provides a positioning apparatus 1300 applied to a target terminal. The positioning apparatus 1300 includes:
a second performing unit 1310 is configured to perform a D2D positioning service process with the first terminal based on the sidelink communication interface.

Optionally, the apparatus further includes:
a seventh receiving unit, configured to receive through a sidelink communication interface a service request message broadcast by the first terminal; and an eighth sending unit, configured to send first positioning-related information to the first terminal based on the sidelink communication interface according to the service request message;
   and/or
a ninth sending unit, configured to send the second positioning-related information based on the sidelink communication interface.

Optionally, the service request message includes at least one of the following:
identification information of the first terminal;
a service type of the requested positioning service;
Quality of Service (QoS) indicator requirements of the positioning service.

Optionally, the first positioning-related information includes at least one of the following:
identification information of the target terminal;
a service type accepted by the target terminal;
a QoS update suggestion of the positioning service;
a received signal power of the target terminal.

Optionally, the second positioning-related information includes at least one of the following:
identification information of the target terminal;
a service type supported by the target terminal;
QoS indicator requirement of the positioning service.

Optionally, the second performing unit is configured to perform at least one of the following operations:
a process of the relative-position request service between the first terminal and the target terminal;
a process of the absolute-position request service of the first terminal;
a process of the absolute-position request service of the target terminal.

Optionally, the second performing unit includes:
a fourth receiving subunit, configured to receive a first positioning request message sent by the first terminal;
a first determining subunit, configured to determine to accept the relative positioning service according to the first positioning request message;
a fourth sending subunit, configured to send a positioning response message to the first terminal;
a second performing subunit, configured to perform the D2D positioning service process;
   wherein the D2D positioning service includes: a relative-position request service between the first terminal and the target terminal, and/or a absolute-position request service of the first terminal.

Optionally, the second performing subunit is specifically configured to:
receive a first SL-PRS sent by the first terminal;
send a second SL-PRS to the first terminal;
respectively measure the first SL-PRS and the second SL-PRS to obtain second measurement information;
send the second measurement information to the first terminal.

Optionally, the apparatus further includes:
an eighth receiving unit, configured to receive first measurement information sent by the first terminal;
a fourth determining unit, configured to determine second information of the relative position between the first terminal and the target terminal according to the first measurement information and the second measurement information;
a tenth sending unit, configured to send the second information of the relative position to the first terminal.

Optionally, the second performing subunit is specifically configured to:
receive a first SL-PRS sent by the first terminal;
send a second SL-PRS to the first terminal;
respectively measure the first SL-PRS and the second SL-PRS to obtain second measurement information;
send the second measurement information and absolute position information of the target terminal to the first terminal.

Optionally, the second performing subunit is specifically configured to:
receive a first SL-PRS sent by the first terminal;
send a second SL-PRS to the first terminal;
respectively measure the first SL-PRS and the second SL-PRS to obtain second measurement information;
receive first measurement information sent by the first terminal;
determine absolute position information of the first terminal according to the first measurement information, the second measurement information, and the absolute position information of the target terminal;
sending the absolute position information of the first terminal to the first terminal through the sidelink communication interface.

Optionally, the second performing subunit is specifically configured to:
receive a first SL-PRS sent by the first terminal;
send a second SL-PRS to the first terminal;
respectively measure the first SL-PRS and the second SL-PRS to obtain second measurement information;
send the second measurement information and the absolute position information of the target terminal to a network side device.

Optionally, the first measurement information includes at least one of the following:
time difference between first time when the first terminal sends the first SL-PRS and second time when the first terminal receives the second SL-PRS;
a reference signal received power RSRP value of the second SL-PRS received by the first terminal;
a direction angle value of receiving the second SL-PRS by the first terminal;
a direction angle value of sending the first SL-PRS by the first terminal.

Optionally, the second measurement information includes at least one of the following:
time difference between third time when the target terminal sends a second SL-PRS and fourth time when the target terminal receives the first SL-PRS;
an RSRP value of receiving the first SL-PRS by the target terminal;
a direction angle value of receiving the first SL-PRS by the target terminal;
a direction angle value of sending the second SL-PRS by the target terminal.

Optionally, the apparatus further includes:
a tenth receiving unit, configured to receive a first signal resource sent by the first terminal;
an eleventh sending unit, configured to send a second signal resource to the first terminal.

Optionally, the apparatus further includes:
an eleventh receiving unit, configured to receive first positioning capability information sent by the first terminal;
a twelfth sending unit, configured to send second positioning capability information to the first terminal.

Optionally, if the service type includes the absolute-position request service of the target terminal, the second performing unit is specifically configured to:
receive a third positioning request message sent by the first terminal, where the third positioning request message is used to indicate that the first terminal is to establish an absolute positioning service with the target terminal;
determine to accept the relative positioning service according to the third positioning request message;
send the absolute position information of the target terminal to the first terminal.

It should be noted that, the foregoing apparatus provided in the embodiments of the present disclosure can implement all the method steps implemented by the foregoing method embodiments applied to the target terminal, and can achieve the same technical effect, the same parts and beneficial effects as those of the method embodiments are not repeated in this embodiment.

It should be noted that the division of the units in the embodiments of the present disclosure is schematic and is merely a logical function division, and there may be other division manners in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

In case that the integrated unit is implemented in the form of a software functional unit and sold or used as an independent product, the integrated unit may be stored in a processor-readable storage medium. Based on such understanding, some or all, or an essential part or a part contributing to the related art, of the technical solutions of the present disclosure may be embodied in the form of a software product, and the computer software product is stored in a storage medium and includes several instructions for causing a computer device (which may be a personal computer, a server, or a network device, etc.) or a processor to execute all or part of the steps of the method described in the embodiments of the present disclosure. The foregoing storage medium includes: any medium that can store program codes, such as a USB flash drive, a removable hard disk, a read-only memory (ROM), a random access memory (RAM), a magnetic disk, or an optical disk.

As shown in FIG. 14, an embodiment of the present disclosure further provides a terminal, where the terminal is a first terminal, and includes: a memory 1420, a transceiver 1400, and a processor 1410, where the memory 1420 is configured to store a computer program; and the transceiver 1400 is configured to send and receive data under the control of the processor 1410 and perform the following operation:
obtaining positioning-related information based on a sidelink communication interface.

The processor 1410 is configured to read a computer program in the memory and perform the following operations:
determining, according to the positioning-related information, a target terminal initiating an D2D positioning service; and performing, by the first terminal using a sidelink communication interface, an D2D positioning service process with the target terminal.

Optionally, the transceiver is configured to:
broadcast a service request message of the first terminal through a sidelink communication interface; receive first positioning-related information sent by a second terminal through the sidelink communication interface;
and/or
monitoring the second positioning-related information sent by the second terminal through the sidelink communication interface.

Optionally, the service request message includes at least one of the following:
identification information of the first terminal;
a service type of the requested positioning service;
Quality of Service (QoS) indicator requirements of the positioning service.

Optionally, the first positioning-related information includes at least one of the following:
identification information of the second terminal;
a service type accepted by the second terminal;
a QoS update suggestion of the positioning service;
a received signal power of the second terminal.

Optionally, the second positioning-related information includes at least one of the following:
identification information of the second terminal;
a service type supported by the second terminal;
QoS indicator requirement of the positioning service.

Optionally, the processor is configured to read a computer program in the memory, and perform at least one of the following operations:
performing a process of the relative-position request service between the first terminal and the target terminal;
performing a process of the absolute-position request service of the first terminal;
performing a process of the absolute-position request service of the target terminal.

Optionally, the transceiver is configured to:
send a first positioning request message to the target terminal through the sidelink communication interface;
receive a positioning response message sent by the target terminal; the processor is configured to: in case that the positioning response message indicates that the target terminal accepts the D2D positioning service, perform the D2D positioning service process;
   the D2D positioning service includes: a relative-position request service between the first terminal and the target terminal, and/or an absolute-position request service of the first terminal.

Optionally, the processor is configured to read a computer program in the memory and perform the following operations:
sending a first sidelink positioning reference signal SL-PRS to the target terminal;
receiving a second SL-PRS sent by the target terminal;
respectively measuring the first SL-PRS and the second SL-PRS to obtain first measurement information;
receiving second measurement information sent by the target terminal;
determining first information of a relative position between the first terminal and the target terminal according to the first measurement information and the second measurement information.

Optionally, the transceiver is further configured to:
send the first measurement information to the target terminal;
receive second information of the relative position between the first terminal and the target terminal sent by the target terminal;
   the second information of the relative position is determined by the target terminal according to the first measurement information and the second measurement information.

Optionally, the processor is configured to read a computer program in the memory and perform the following operations:
sending a first SL-PRS to the target terminal;
receiving a second SL-PRS sent by the target terminal;
respectively measuring the first SL-PRS and the second SL-PRS to obtain first measurement information;
receiving second measurement information and absolute position information of the target terminal from the target terminal;
determining absolute position information of the first terminal according to the first measurement information, the second measurement information, and the absolute position information of the target terminal.

Optionally, the processor is configured to read a computer program in the memory and perform the following operations:
sending a first SL-PRS to the target terminal; and receiving a second SL-PRS sent by the target terminal;
respectively measuring the first SL-PRS and the second SL-PRS to obtain first measurement information;
sending the first measurement information to the target terminal;
receiving absolute position information of the first terminal sent by the target terminal through the sidelink communication interface;
wherein the absolute position information of the first terminal is determined by the target terminal based on the first measurement information, the second measurement information of the target terminal, and the absolute position information of the target terminal.

Optionally, the processor is configured to read a computer program in the memory and perform the following operations:
sending a first SL-PRS to the target terminal;
receiving a second SL-PRS sent by the target terminal;
respectively measuring the first SL-PRS and the second SL-PRS to obtain first measurement information;
sending the first measurement information to a network side device;
receiving absolute position information of the first terminal sent by the network side device;
wherein the absolute position information of the first terminal is determined by the network side device based on the first measurement information, the second measurement information of the target terminal, and the absolute position information of the target terminal.

Optionally, the first measurement information includes at least one of the following:
time difference between first time when the first terminal sends the first SL-PRS and second time when the first terminal receives the second SL-PRS;
a reference signal received power RSRP value of the second SL-PRS received by the first terminal;
a direction angle value of receiving the second SL-PRS by the first terminal;
a direction angle value of sending the first SL-PRS by the first terminal.

Optionally, the second measurement information includes at least one of the following:
time difference between third time when the target terminal sends a second SL-PRS and fourth time when the target terminal receives the first SL-PRS;
an RSRP value of the first SL-PRS received by the target terminal;
a direction angle value of receiving the first SL-PRS by the target terminal;
a direction angle value of sending the second SL-PRS by the target terminal.

Optionally, the transceiver is further configured to send a first signal resource to the target terminal; and receive a second signal resource sent by the target terminal.

Optionally, the transceiver is further configured to send first positioning capability information of the first terminal to the target terminal; and receive second positioning capability information of the target terminal sent by the target terminal; wherein the processor determines a positioning manner based on the first positioning capability information and the second positioning capability information.

Optionally, the transceiver is further configured to send a first signal resource to the target terminal and the network side device; and receive a second signal resource of the target terminal sent by the network side device.

Optionally, the transceiver is further configured to send first positioning capability information of the first terminal to the network side device.

Optionally, the transceiver is further configured to send a second positioning request message to the network side device, where the second positioning request message includes identification information of the first terminal and identification information of the target terminal; and receive a positioning response message sent by the network side device.

Optionally, the processor is configured to read a computer program in the memory and perform the following operations:
sending a third positioning request message to the target terminal, where the third positioning request message is used to indicate that the first terminal is to establish an absolute positioning service with the target terminal;
receiving a positioning response message sent by the target terminal;
receiving, in a case that the positioning response message indicates that the target terminal accepts the absolute positioning service, absolute position information of the target terminal sent by the target terminal.

It should be noted that, in FIG. 14, the bus architecture may include any number of interconnected buses and bridges, and specifically link various circuits such as one or more processors represented by the processor 1410 and the memory represented by the memory 1420. The bus architecture may further link various other circuits, such as a peripheral device, a voltage stabilizer, and a power management circuit, which are well known in the art, and therefore are not further described herein. The bus interface provides an interface. The transceiver 1400 may be a plurality of elements, that is, include a transmitter and a transceiver, and provide units for communicating with various other apparatuses on a transmission medium. For different user equipment, the user interface 1430 may also be an interface capable of externally connecting to a required device, and the connected device includes, but is not limited to, a keypad, a display, a speaker, a microphone, a joystick, and the like. The processor 1410 is responsible for managing the bus architecture and general processing, and the memory 1420 may store data used by the processor 1410 when performing operations.

Optionally, the processor 1410 may be a central processing unit (CPU), an application specific integrated circuit (ASIC), a field programmable gate array (FPGA), or a complex programmable logic device (CPLD), and the processor may also use a multi-core architecture.

The processor invokes the computer program stored in the memory, and is configured to perform any one of the methods provided in the embodiments of the present disclosure according to the obtained executable instructions. The processor and the memory may also be physically arranged separately.

It should be noted that, the above terminal provided in the embodiments of the present disclosure can implement all the method steps implemented by the foregoing method embodiment applied to the first terminal, and can achieve the same technical effect, the same parts and beneficial effects as those of the method embodiments are not be repeated in this embodiment.

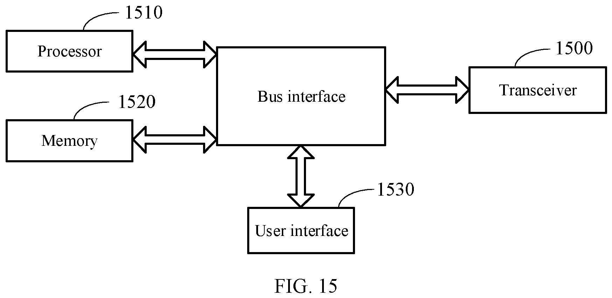

As shown in FIG. 15, an embodiment of the present disclosure further provides a terminal, where the terminal is a target terminal. The target terminal includes: a memory 1520, a transceiver 1500, and a processor 1510; the memory 1520 is configured to store a computer program; the transceiver 1500 is configured to send and receive data under the control of the processor 1510; and the processor 1510 is configured to read the computer program in the memory and perform the following operations:
performing an D2D positioning service process with the first terminal based on the sidelink communication interface.

Optionally, the transceiver is configured to:
receive through a sidelink communication interface a service request message broadcast by the first terminal; send first positioning-related information to the first terminal based on the sidelink communication interface according to the service request message;
   and/or
send the second positioning-related information based on the sidelink communication interface.

Optionally, the service request message includes at least one of the following:
identification information of the first terminal;
a service type of the requested positioning service;
Quality of Service (QoS) indicator requirements of the positioning service.

Optionally, the first positioning-related information includes at least one of the following:
identification information of the target terminal;
a service type accepted by the target terminal;
a QoS update suggestion of the positioning service;
a received signal power of the target terminal.

Optionally, the second positioning-related information includes at least one of the following:
identification information of the target terminal;
a service type supported by the target terminal;
QoS indicator requirement of the positioning service.

Optionally, the processor is configured to read a computer program in the memory and perform at least one of the following operations:
performing a process of the relative-position request service between the first terminal and the target terminal;
performing a process of the absolute-position request service of the first terminal;
performing a process of the absolute-position request service of the target terminal.

Optionally, the transceiver is configured to receive a first positioning request message sent by the first terminal,
the processor is further configured to determine to accept the relative positioning service according to the first positioning request message;
the transceiver is configured to send a positioning response message to the first terminal;
the processor is configured to perform the D2D positioning service process.

Optionally, the processor is configured to read a computer program in the memory and perform the following operations:
receiving a first SL-PRS sent by the first terminal;
sending a second SL-PRS to the first terminal;
respectively measuring the first SL-PRS and the second SL-PRS to obtain second measurement information;
sending the second measurement information to the first terminal.

Optionally, the transceiver is further configured to: receive first measurement information sent by the first terminal; and the processor is configured to determine second information of the relative position between the first terminal and the target terminal according to the first measurement information and the second measurement information; and the transceiver is configured to send the second information of the relative position to the first terminal.

Optionally, the processor is configured to read a computer program in the memory and perform the following operations:
receiving a first SL-PRS sent by the first terminal;
sending a second SL-PRS to the first terminal;
respectively measuring the first SL-PRS and the second SL-PRS to obtain second measurement information;
sending the second measurement information and the absolute position information of the target terminal to the first terminal.

Optionally, the processor is configured to read a computer program in the memory and perform the following operations:
receiving a first SL-PRS sent by the first terminal;
sending a second SL-PRS to the first terminal;
respectively measuring the first SL-PRS and the second SL-PRS to obtain second measurement information;
receiving first measurement information from the first terminal;
determining the absolute position information of the first terminal according to the first measurement information, the second measurement information, and the absolute position information of the target terminal;
sending the absolute position information of the first terminal to the first terminal according to the sidelink communication interface.

Optionally, the processor is configured to read a computer program in the memory and perform the following operations:
receiving a first SL-PRS sent by the first terminal;
sending a second SL-PRS to the first terminal;
respectively measuring the first SL-PRS and the second SL-PRS to obtain second measurement information;
sending the second measurement information and the absolute position information of the target terminal to the network side device.

Optionally, the first measurement information includes at least one of the following:
time difference between first time when the first terminal sends the first SL-PRS and second time when the first terminal receives the second SL-PRS;
a reference signal received power RSRP value of the second SL-PRS received by the first terminal;
a direction angle value of receiving the second SL-PRS by the first terminal;
a direction angle value of sending the first SL-PRS by the first terminal.

Optionally, the second measurement information includes at least one of the following:
time difference between third time when the target terminal sends a second SL-PRS and fourth time when the target terminal receives the first SL-PRS;
an RSRP value of receiving the first SL-PRS by the target terminal;
a direction angle value of receiving the first SL-PRS by the target terminal;
a direction angle value of sending the second SL-PRS by the target terminal.

Optionally, the transceiver is further configured to: receive a first signal resource sent by the first terminal; and send a second signal resource to the first terminal.

Optionally, the transceiver is further configured to: receive first positioning capability information sent by the first terminal; and send second positioning capability information to the first terminal.

Optionally, the processor is configured to read a computer program in the memory and perform the following operations:
receiving a third positioning request message sent by the first terminal, where the third positioning request message is used to indicate that the first terminal is to establish an absolute positioning service with the target terminal;
determining to accept the relative positioning service according to the third positioning request message;
sending the absolute position information of the target terminal to the first terminal.

It should be noted that, in FIG. 15, the bus architecture may include any number of interconnected buses and bridges, and specifically link various circuits of one or more processors represented by the processor 1510 and the memory represented by the memory 1520. The bus architecture may further link various other circuits, such as a peripheral device, a voltage stabilizer, and a power management circuit, which are well known in the art, and therefore are not further described herein. The bus interface provides an interface. The transceiver 1500 may be a plurality of elements, that is, includes a transmitter and a transceiver, and provides units for communicating with various other apparatuses on a transmission medium. For different user equipment, the user interface 1530 may also be an interface capable of externally connecting to a required device, and the connected device includes, but is not limited to, a keypad, a display, a speaker, a microphone, a joystick, and the like. The processor 1510 is responsible for managing the bus architecture and general processing, and the memory 1520 may store data used by the processor 1510 when performing operations.

Optionally, the processor 1510 may be a central processing unit (CPU), an application specific integrated circuit (ASIC), a field programmable gate array (FPGA), or a complex programmable logic device (CPLD), and the processor may also use a multi-core architecture.

The processor invokes the computer program stored in the memory, and is configured to perform any one of the methods provided in the embodiments of the present disclosure according to the obtained executable instructions. The processor and the memory may also be physically arranged separately.

It should be noted that, the above terminal provided in the embodiments of the present disclosure can implement all the method steps implemented by the foregoing method embodiment applied to the target terminal, and can achieve the same technical effect, the same parts and beneficial effects as those of the method embodiments are not described in this embodiment.

In addition, an embodiment of the present disclosure further provides a processor-readable storage medium on which a computer program is stored, wherein when the program is executed by a processor, the steps of the above positioning method are implemented. In addition, the same technical effect can be achieved, and to avoid repetition, details are not described herein again. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a compact disk (CD), a digital video disk (DVD), a Blu-ray disk (Blu-ray Disk, BD), High-Definition Versatile Disk (HVD), etc.), and semiconductor memory (e.g. Read-Only Memory (ROM), Erasable Programmable Read-Only Memory (EPROM), Electrically Erasable Programmable Read Only Memory (EEPROM), Non-Volatile Memory (NAND Flash), Solid State Disk (SSD).

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may take the form of a computer program product implemented on one or more computer-usable storage media (including but not limited to a magnetic disk memory and an optical memory) including computer-usable program codes.

The present disclosure is described with reference to flowcharts and/or block diagrams of the method, the device (system), and the computer program product according to the embodiments of the present disclosure. It should be understood that each process and/or block in the flowcharts and/or block diagrams and a combination of flows and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, such that the instructions executed by the processor of the computer or other programmable data processing device generate a means for implementing the functions specified in one or more flows in the flowcharts and/or one or more blocks in the block diagrams.

These processor-executable instructions may also be stored in a processor-readable memory that can direct a computer or other programmable data processing device to function in a particular manner, such that the instructions stored in the processor-readable memory generate an article of manufacture including an instruction device that implements the functions specified in one or more flows of the flowcharts and/or one or more blocks of the block diagrams.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowcharts and/or one or more blocks of the block diagrams.

It should be noted that, the division of each of the foregoing modules is merely a division of logical functions, and during actual implementation, all or some of the foregoing modules may be integrated into one physical entity, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a certain chip of the foregoing apparatus, and in addition, the determining module may be stored in a memory of the foregoing apparatus in a form of program codes, and a certain processing element of the foregoing apparatus invokes and executes the function of the foregoing determining module. Other modules may be implemented similarly. In addition, all or some of these modules may be integrated together, or may be implemented independently. The processing element described herein may be an integrated circuit with signal processing capability. In an implementation process, each step of the foregoing method or the foregoing modules may be completed by using an integrated logic circuit of hardware in the processor element or an instruction in a form of software.

For example, each module, unit, subunit, or submodule may be one or more integrated circuits configured to implement the foregoing method, for example, one or more application specific integrated circuits (ASIC), or one or more microprocessors (DSP), or one or more field programmable gate arrays (FPGA). For another example, when a certain module is implemented in a form of scheduling program codes by using a processing element, the processing element may be a general-purpose processor, for example, a central processing unit (CPU) or another processor that can invoke the program codes. For another example, these modules may be integrated together and implemented in a form of a system-on-a-chip (SOC).

The terms "first", "second", and the like in the specification and claims of the present disclosure are used to distinguish similar objects, and are not necessarily used to describe a specific order or sequence. It should be understood that the terms used in this way may be interchanged where appropriate, so that the embodiments of the present disclosure described herein are implemented in an order other than those illustrated or described herein. In addition, the terms "include" and "have" and any variations thereof are intended to cover non-exclusive inclusion, for example, processes, methods, systems, products, or devices that include a series of steps or units are not necessarily limited to those steps or units that are clearly listed, but may include other steps or units that are not expressly listed or inherent to these processes, methods, products, or devices. In addition, the description and claims use "and/or" to refer to at least one of the connected objects, such as A and/or B and/or C indicating seven cases that A exists along, B exists alone, C exists alone, both A and B exist, both B and C exist, both A and C exist, and all of A, B and C exist. Similarly, the use of "at least one of A and B" in this specification and the claims should be understood as "A alone, or B alone, or both A and B".

It is obvious that those skilled in the art can make various modifications and variations to the present disclosure without departing from the spirit and scope of the present disclosure. The present disclosure is intended to cover these modifications and variations if the modifications and variations fall within the protection scope defined by the accompanying claims and their equivalent technologies.

## Claims

1. A positioning method, comprising:
obtaining positioning-related information based on a sidelink communication interface by a first terminal;
determining, by the first terminal according to the positioning-related information, a target terminal that initiates a Device-to-Device (D2D) positioning service;
performing a process of the D2D positioning service with the target terminal through a sidelink communication interface by the first terminal.

2. The method according to claim 1, wherein obtaining the positioning-related information based on the sidelink communication interface comprises:
broadcasting a service request message of the first terminal through a sidelink communication interface; receiving first positioning-related information from a second terminal through the sidelink communication interface;
and/or
monitoring second positioning-related information sent by the second terminal through the sidelink communication interface.

3. The method according to claim 1, wherein performing the process of the D2D positioning service with the target terminal comprises at least one of following:
performing a process of a relative-position request service between the first terminal and the target terminal;
performing a process of the absolute-position request service of the first terminal;
performing a process of the absolute-position request service of the target terminal.

4. The method according to claim 3, wherein performing the process of the D2D positioning service with the target terminal through the sidelink communication interface comprises:
sending a first positioning request message to the target terminal through the sidelink communication interface;
receiving a positioning response message from the target terminal;
in case that the positioning response message indicates that the target terminal accepts the D2D positioning service, performing the process of the D2D positioning service,
wherein the D2D positioning service comprises:
the relative-position request service between the first terminal and the target terminal, and/or the absolute-position request service of the first terminal.

5. The method according to claim 3 or 4, wherein performing the process of the relative-position request service between the first terminal and the target terminal comprises:
sending a first sidelink positioning reference signal (SL-PRS) to the target terminal;
receiving a second SL-PRS from the target terminal;
respectively measuring the first SL-PRS and the second SL-PRS to obtain first measurement information;
receiving second measurement information from the target terminal;
determining first information of the relative position between the first terminal and the target terminal according to the first measurement information and the second measurement information.

6. The method according to claim 5, further comprising:
sending the first measurement information to the target terminal;
receiving second information of the relative position between the first terminal and the target terminal from the target terminal, wherein the second information of the relative position is determined by the target terminal according to the first measurement information and the second measurement information.

7. The method according to claim 3 or 4, wherein performing the process of the absolute-position request service of the first terminal comprises:
sending a first sidelink positioning reference signal (SL-PRS) to the target terminal;
receiving a second SL-PRS from the target terminal;
respectively measuring the first SL-PRS and the second SL-PRS to obtain first measurement information;
receiving second measurement information and absolute position information of the target terminal from the target terminal;
determining absolute position information of the first terminal according to the first measurement information, the second measurement information, and the absolute position information of the target terminal.

8. The method according to claim 3 or 4, wherein performing the process of the absolute-position request service of the first terminal comprises:
sending a first sidelink positioning reference signal (SL-PRS) to the target terminal;
receiving a second SL-PRS from the target terminal;
respectively measuring the first SL-PRS and the second SL-PRS to obtain first measurement information;
sending the first measurement information to the target terminal; and receiving absolute position information of the first terminal from the target terminal through the sidelink communication interface,
wherein the absolute position information of the first terminal is determined by the target terminal according to the first measurement information, second measurement information of the target terminal, and absolute position information of the target terminal.

9. The method according to claim 3 or 4, wherein performing the process of the absolute-position request service of the first terminal comprises:
sending a first sidelink positioning reference signal (SL-PRS) to the target terminal;
receiving a second SL-PRS from the target terminal;
respectively measuring the first SL-PRS and the second SL-PRS to obtain first measurement information;
sending the first measurement information to a network side device;
receiving absolute position information of the first terminal from the network side device, wherein the absolute position information of the first terminal is determined by the network side device based on the first measurement information, second measurement information of the target terminal, and absolute position information of the target terminal.

10. The method according to claim 5 or 7 or 8, further comprising:
sending first positioning capability information of the first terminal to the target terminal;
receiving second positioning capability information of the target terminal from the target terminal;
determining a positioning manner according to the first positioning capability information and the second positioning capability information.

11. The method according to claim 9, further comprising:
sending first positioning capability information of the first terminal to the network side device.

12. The method according to claim 9, further comprising:
sending a second positioning request message to the network side device, wherein the second positioning request message comprises identification information of the first terminal and identification information of the target terminal;
receiving a positioning response message from the network side device.

13. The method according to claim 3, wherein performing the process of the absolute-position request service of the target terminal comprises:
sending a third positioning request message to the target terminal, wherein the third positioning request message is configured to indicate that the first terminal is to establish an absolute positioning service with the target terminal;
receiving a positioning response message from the target terminal;
receiving absolute position information of the target terminal from the target terminal, in case that the positioning response message indicates that the target terminal accepts the absolute positioning service.

14. A positioning method comprising:
performing, by a target terminal, a process of a Device-to-Device (D2D) positioning service with a first terminal based on a sidelink communication interface.

15. The method according to claim 14, further comprising:
receiving a service request message broadcast by the first terminal through a sidelink communication interface; sending first positioning-related information to the first terminal based on the sidelink communication interface according to the service request message;
and/or
sending second positioning-related information based on the sidelink communication interface.

16. The method according to claim 14, wherein performing the process of the D2D positioning service with the first terminal comprises at least one of following:
performing a process of a relative-position request service between the first terminal and the target terminal;
performing a process of the absolute-position request service of the first terminal;
performing a process of the absolute-position request service of the target terminal.

17. The method according to claim 16, wherein performing the process of the D2D positioning service with the first terminal based on the sidelink communication interface comprises:
receiving a first positioning request message from the first terminal;
determining to accept the relative positioning service according to the first positioning request message;
sending a positioning response message to the first terminal;
performing the process of the D2D positioning service, wherein the D2D positioning service includes: a relative-position request service between the first terminal and the target terminal, and/or a absolute-position request service of the first terminal.

18. The method according to claim 16 or 17, wherein performing the process of the relative-position request service between the first terminal and the target terminal comprises:
receiving a first sidelink positioning reference signal (SL-PRS) from the first terminal;
sending a second SL-PRS to the first terminal;
respectively measuring the first SL-PRS and the second SL-PRS to obtain second measurement information;
sending the second measurement information to the first terminal.

19. The method according to claim 18, further comprising:
receiving first measurement information from the first terminal;
determining second information of the relative position between the first terminal and the target terminal according to the first measurement information and the second measurement information;
sending the second information of the relative position to the first terminal.

20. The method according to claim 16 or 17, wherein performing the process of the absolute-position request service of the first terminal comprises:
receiving a first sidelink positioning reference signal (SL-PRS) from the first terminal;
sending a second SL-PRS to the first terminal;
respectively measuring the first SL-PRS and the second SL-PRS to obtain second measurement information;
sending the second measurement information and absolute position information of the target terminal to the first terminal.

21. The method according to claim 16 or 17, wherein performing the process of the absolute-position request service of the first terminal comprises:
receiving a first sidelink positioning reference signal (SL-PRS) from the first terminal;
sending a second SL-PRS to the first terminal;
respectively measuring the first SL-PRS and the second SL-PRS to obtain second measurement information;
receiving first measurement information from the first terminal;
determining absolute position information of the first terminal according to the first measurement information, the second measurement information, and absolute position information of the target terminal;
sending the absolute position information of the first terminal to the first terminal through the sidelink communication interface.

22. The method according to claim 16 or 17, wherein performing the process of the absolute-position request service of the first terminal comprises:
receiving a first sidelink positioning reference signal (SL-PRS) from the first terminal;
sending a second SL-PRS to the first terminal;
respectively measuring the first SL-PRS and the second SL-PRS to obtain second measurement information;
sending the second measurement information and absolute position information of the target terminal to a network side device.

23. The method according to claim 18 or 20 or 21, further comprising:
receiving first positioning capability information from the first terminal;
sending second positioning capability information to the first terminal.

24. The method according to claim 16, wherein performing the process of the absolute-position request service of the target terminal comprises:
receiving a third positioning request message from the first terminal, wherein the third positioning request message is configured to indicate that the first terminal is to establish an absolute positioning service with the target terminal;
determining to accept the relative positioning service according to the third positioning request message;
sending absolute position information of the target terminal to the first terminal.

25. A terminal comprising:
a memory, a transceiver, and a processor, wherein the memory is configured to store a computer program; the processor is configured to read the computer program in the memory; the transceiver is configured to send and receive data under the control of the processor and perform obtaining positioning-related information based on a sidelink communication interface;
the processor is configured to read the computer program in the memory and perform the following operations:
determining, according to the positioning-related information, a target terminal that initiates a Device-to-Device (D2D) positioning service;
performing a process of the D2D positioning service with the target terminal through a sidelink communication interface.

26. The terminal according to claim 25, wherein the processor is configured to read the computer program in the memory, and perform at least one of following operations:
performing a process of a relative-position request service between a first terminal and the target terminal;
performing a process of the absolute-position request service of the first terminal;
performing a process of the absolute-position request service of the target terminal.

27. The terminal according to claim 26, wherein the transceiver is configured to send a first positioning request message to the target terminal through the sidelink communication interface, and receive a positioning response message from the target terminal;
the processor is configured to read the computer program in the memory and perform the following operations:
performing the process of the D2D positioning service in case that the positioning response message indicates that the target terminal accepts the D2D positioning service,
wherein the D2D positioning service comprises:
the relative-position request service between the first terminal and the target terminal, and/or the absolute-position request service of the first terminal.

28. The terminal according to claim 26 or 27, wherein the processor is configured to read the computer program in the memory and perform the following operations:
sending a first sidelink positioning reference signal (SL-PRS) to the target terminal;
receiving a second SL-PRS from the target terminal;
respectively measuring the first SL-PRS and the second SL-PRS to obtain first measurement information;
receiving second measurement information from the target terminal;
determining first information of the relative position between the first terminal and the target terminal according to the first measurement information and the second measurement information.

29. The terminal according to claim 28, wherein the transceiver is further configured to:
send the first measurement information to the target terminal;
receive second information of the relative position between the first terminal and the target terminal from the target terminal, wherein the second information of the relative position is determined by the target terminal according to the first measurement information and the second measurement information.

30. The terminal according to claim 26 or 27, wherein the processor is configured to read the computer program in the memory and perform the following operations:
sending a first sidelink positioning reference signal (SL-PRS) to the target terminal;
receiving a second SL-PRS from the target terminal;
respectively measuring the first SL-PRS and the second SL-PRS to obtain first measurement information;
receiving second measurement information and absolute position information of the target terminal from the target terminal;
determining absolute position information of the first terminal according to the first measurement information, the second measurement information, and the absolute position information of the target terminal.

31. The terminal according to claim 26 or 27, wherein the processor is configured to read the computer program in the memory and perform the following operations:
sending a first sidelink positioning reference signal (SL-PRS) to the target terminal;
receiving a second SL-PRS from the target terminal;
respectively measuring the first SL-PRS and the second SL-PRS to obtain first measurement information;
sending the first measurement information to the target terminal; and
receiving absolute position information of the first terminal from the target terminal through the sidelink communication interface,
wherein the absolute position information of the first terminal is determined by the target terminal according to the first measurement information, second measurement information of the target terminal, and absolute position information of the target terminal.

32. The terminal according to claim 26 or 27, wherein the processor is configured to read the computer program in the memory and perform the following operations:
sending a first sidelink positioning reference signal (SL-PRS) to the target terminal;
receiving a second SL-PRS from the target terminal;
respectively measuring the first SL-PRS and the second SL-PRS to obtain first measurement information;
sending the first measurement information to a network side device;
receiving absolute position information of the first terminal from the network side device, wherein the absolute position information of the first terminal is determined by the network side device based on the first measurement information, second measurement information of the target terminal, and absolute position information of the target terminal.

33. The terminal according to claim 26, wherein the processor is configured to read the computer program in the memory and perform the following operations:
sending a third positioning request message to the target terminal, wherein the third positioning request message is configured to indicate that the first terminal is to establish an absolute positioning service with the target terminal;
receiving a positioning response message from the target terminal;
receiving absolute position information of the target terminal from the target terminal, in case that the positioning response message indicates that the target terminal accepts the absolute positioning service.

34. A terminal comprising:
a memory, a transceiver, and a processor,
wherein the memory is configured to store a computer program; the transceiver is configured to send and receive data under the control of the processor; and the processor is configured to read the computer program in the memory and perform the following operation:
performing a process of a Device-to-Device (D2D) positioning service with a first terminal based on a sidelink communication interface.

35. The terminal according to claim 34, wherein the processor is configured to read a computer program in the memory and perform at least one of the following operations:
performing a process of a relative-position request service between the first terminal and the target terminal;
performing a process of the absolute-position request service of the first terminal;
performing a process of the absolute-position request service of the target terminal.

36. The terminal according to claim 35, wherein the transceiver is configured to:
receive a first positioning request message from the first terminal;
determine to accept the relative positioning service according to the first positioning request message;
send a positioning response message to the first terminal;
wherein the processor is configured to:
perform the process of the D2D positioning service, wherein the D2D positioning service comprises: a relative-position request service between the first terminal and the target terminal, and/or a absolute-position request service of the first terminal.

37. The terminal according to claim 35, wherein the processor is configured to read the computer program in the memory and perform the following operations:
receiving a third positioning request message from the first terminal, wherein the third positioning request message is configured to indicate that the first terminal is to establish an absolute positioning service with the target terminal;
determining to accept the relative positioning service according to the third positioning request message;
sending absolute position information of the target terminal to the first terminal.

38. A positioning apparatus, comprising:
a first obtaining unit, configured to obtain positioning-related information based on a sidelink communication interface;
a first determining unit, configured to determine, according to the positioning-related information, a target terminal that initiates a Device-to-Device (D2D) positioning service;
a first performing unit, configured to perform a process of the D2D positioning service with the target terminal through a sidelink communication interface.

39. A positioning apparatus, comprising:
a second performing unit, configured to perform a process of a Device-to-Device (D2D) positioning service with a first terminal based on a sidelink communication interface.

40. A processor-readable storage medium having stored thereon a computer program, wherein when the computer program is executed by a processor, the processor implements the steps of the positioning method according to any one of claims 1 to 13, or implements the steps of the positioning method according to any one of claims 14 to 24.
